(19) Europäisches Patentamt

European Patent Office

Office européen des brevets

(11) **EP 4 636 611 A1**

(12) **EUROPEAN PATENT APPLICATION**

(43) Date of publication:
**22.10.2025 Bulletin 2025/43**

(51) International Patent Classification (IPC):
*G06F 16/901* (2019.01)      *G06F 16/71* (2019.01)

(21) Application number: **24315193.3**

(52) Cooperative Patent Classification (CPC):
**G06F 16/9024; G06F 16/71**

(22) Date of filing: **19.04.2024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **Borba Pinheiro, Rodrigo
35700 RENNES (FR)**
• **Sandri, Gustavo
35510 CESSON-SEVIGNE (FR)**
• **Marvie, Jean-Eudes
35830 BETTON (FR)**

(74) Representative: **Vossius & Partner
Patentanwälte Rechtsanwälte mbB
Siebertstraße 3
81675 München (DE)**

(54) **RAHT LEARNING BASED PREDICTION**

(57) Some embodiments of a method may include obtaining information corresponding to a point cloud, wherein the point cloud comprises a plurality of data nodes; selecting a parent node from the plurality of data nodes; determining a set of prediction data nodes within a neighborhood of the parent node; determining a set of weights corresponding to the set of prediction data nodes; predicting attributes corresponding to a child node of the parent node, wherein predicting the attributes uses the set of prediction data nodes and the set of weights corresponding to the set of prediction data nodes; encoding point cloud data using the predicted attributes, wherein the point cloud data corresponds to the plurality of data nodes; and transmitting the encoded point cloud data as a bitstream to a device.

FIG. 10

**Description**

**BACKGROUND**

Advances in 3D capturing and rendering technologies are enabling new applications and services in the fields of autonomous driving, cultural heritage archival, immersive telepresence, and virtual/augmented reality. Point clouds have arisen as one of the main 3D scene representations for such applications. A point cloud frame includes a set of 3D points, each point being represented with its 3D position and possibly several attributes such as color, transparency, and reflectance.

**SUMMARY**

An example method in accordance with some embodiments may include: obtaining information corresponding to a point cloud, wherein the point cloud includes a plurality of data nodes; selecting a parent node from the plurality of data nodes; determining a set of prediction data nodes within a neighborhood of the parent node; determining a set of weights generated from the set of prediction data nodes; predicting attributes corresponding to a child node of the parent node, wherein predicting the attributes uses the set of prediction data nodes and the set of weights generated from the set of prediction data nodes; encoding point cloud data using the predicted attributes, wherein the point cloud data corresponds to the plurality of data nodes; and transmitting the encoded point cloud data as a bitstream to a device.

For some embodiments of the example method, determining the set of weights generated from the set of prediction data nodes includes performing a training process to determine the set of weights.

For some embodiments of the example method, determining the set of weights generated from the set of prediction data nodes includes using a runtime process to predict the set of weights.

For some embodiments of the example method, the runtime process includes performing a multi-layer perceptron (MLP) to predict the set of weights.

For some embodiments of the example method, the runtime process includes performing a learned weighted average (LWA) process to predict the set of weights.

For some embodiments of the example method, the runtime process includes using a deep network model to predict the set of weights.

For some embodiments of the example method, determining the set of weights generated from the set of prediction data nodes includes using a multi-pass mode process to predict the set of weights.

For some embodiments of the example method, the multi-pass process includes performing a learned weighted average (LWA) process to predict the set of weights.

Some embodiments of the example method may further include: determining a second set of weights corresponding to the set of prediction data nodes, wherein the second set of weights include a set of overfitting weights; and transmitting the second set of weights as a second bitstream to the device.

For some embodiments of the example method, predicting the attributes includes using a deep network model to predict the attributes.

For some embodiments of the example method, the deep network model takes at least one of these items as inputs: (1) attributes of previously decoded voxels, (2) attributes of the parent node, (3) the set of weights, and (4) level in which encoding of the point cloud data is being done, and the set of weights indicates how many leaves are condensed in a node of the set of prediction data nodes.

For some embodiments of the example method, predicting the attributes includes performing a region-adaptive hierarchical transform (RAHT) learning-based process.

For some embodiments of the example method, the neighborhood of the parent node includes one or more uncle nodes and one or more cousin nodes.

For some embodiments of the example method, determining the set of weights includes determining the set of weights through an adaptive process performed at runtime.

An example apparatus in accordance with some embodiments may include: a processor; and a non-transitory computer-readable medium storing instructions operative, when executed by the processor, to cause the apparatus to perform any one of the methods listed above.

**BRIEF DESCRIPTION OF THE DRAWINGS**

FIG. 1A is a system diagram illustrating an example communications system according to some embodiments.

FIG. 1B is a system diagram illustrating an example wireless transmit/receive unit (WTRU) that may be used within the communications system illustrated in FIG. 1A according to some embodiments.

FIG. 1C is a system diagram illustrating an example set of interfaces for a system according to some embodiments.

FIG. 2 is a schematic illustration showing an example region-adaptive hierarchical transform (RAHT) process.

FIG. 3 is a schematic illustration showing an example upconverted transform domain prediction in a RAHT process.

FIG. 4 is a schematic illustration showing an example representation of a 3D RAHT tree according to some embodiments.

FIG. 5 is a schematic illustration showing an example parent-child node tree according to some embodiments.

FIG. 6 is a process diagram illustrating an example G-PCC encoding process according to some embodiments.

FIG. 7 is a process diagram illustrating an example G-PCC decoding process according to some embodiments.

FIG. 8 is a process diagram illustrating an example switch process for selecting a weight prediction process according to some embodiments.

FIG. 9 is a process diagram illustrating an example process for on the fly learning of the prediction weights according to some embodiments.

FIG. 10 is a process diagram illustrating an example encoding process with a training / optimizing of weights process according to some embodiments.

FIG. 11 is a process diagram illustrating an example process for multi-pass learning of the prediction weights for the encoder according to some embodiments.

FIG. 12 is a process diagram illustrating an example process for the first step of multi-pass mode on the encoder side according to some embodiments.

FIG. 13 is a process diagram illustrating an example process for the second step of multi-pass mode on the encoder side according to some embodiments.

FIG. 14 is a process diagram illustrating an example process for on the fly learning of the prediction weights for the decoder according to some embodiments.

FIG. 15 is a process diagram illustrating an example decoding process with a training / optimizing of weights process according to some embodiments.

FIG. 16 is a process diagram illustrating an example process for multi-pass learning of the prediction weights for the decoder according to some embodiments.

FIG. 17 is a process diagram illustrating an example learning weighted average process with an encoding process according to some embodiments.

FIG. 18 is a schematic illustration showing an example weighted average consideration order process according to some embodiments.

FIGs. 19A-19C are schematic illustrations showing an example 3D view of block prediction consideration order according to some embodiments.

FIGs. 20A-20C are schematic illustrations showing an example 2D view of block prediction consideration order according to some embodiments.

FIGs. 21A-21C are schematic illustrations showing an example 3D view of block prediction consideration order according to some embodiments.

FIGs. 22A-22C are schematic illustrations showing an example 2D view of block prediction consideration order according to some embodiments.

FIG. 23 is a schematic illustration showing an example multi-layer perceptron architecture according to some embodiments.

FIG. 24 is a flowchart illustrating an example encoding process according to some embodiments.

FIG. 25 is a flowchart illustrating an example decoding process according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "in at least one embodiment, ...." For brevity and clarity of presentation, this implied leading clause is not repeated *ad nauseum* in the detailed description.

## DETAILED DESCRIPTION

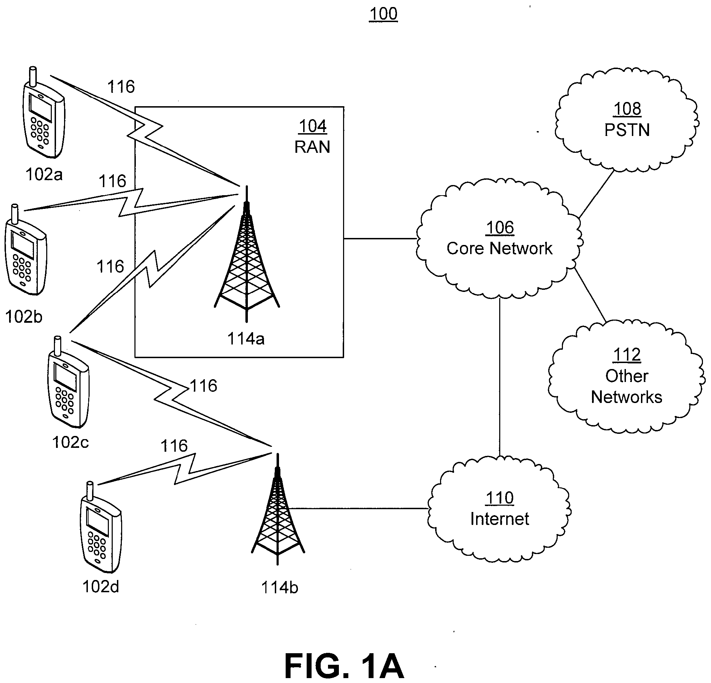

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104/113 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106 may be in direct or indirect communication with other RANs that employ the same RAT as the RAN 104/113 or a different RAT. For example, in addition to being connected to the RAN 104/113, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

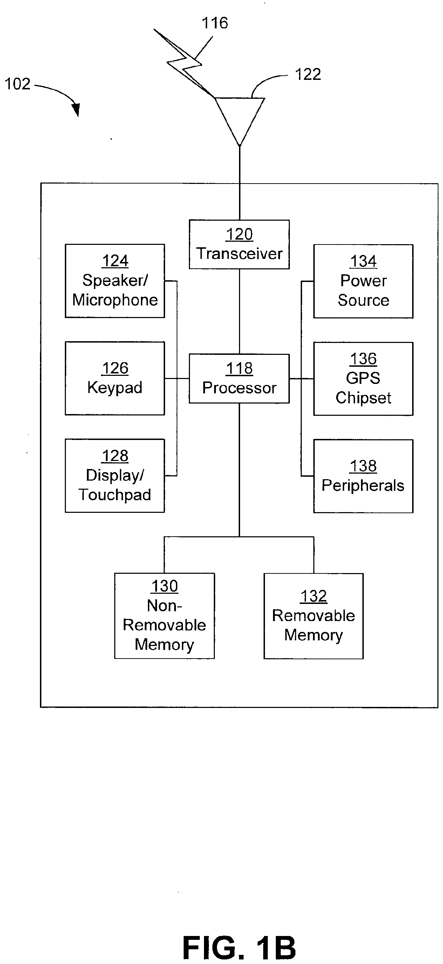

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the downlink (e.g., for reception)).

Although the WTRU is described in FIGs. 1A-1B as a wireless terminal, it is contemplated that in certain representative embodiments that such a terminal may use (e.g., temporarily or permanently) wired communication interfaces with the communication network.

In representative embodiments, the other network 112 may be a WLAN.

In view of FIGs. 1A-1B, and the corresponding description, one or more, or all, of the functions described. herein may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

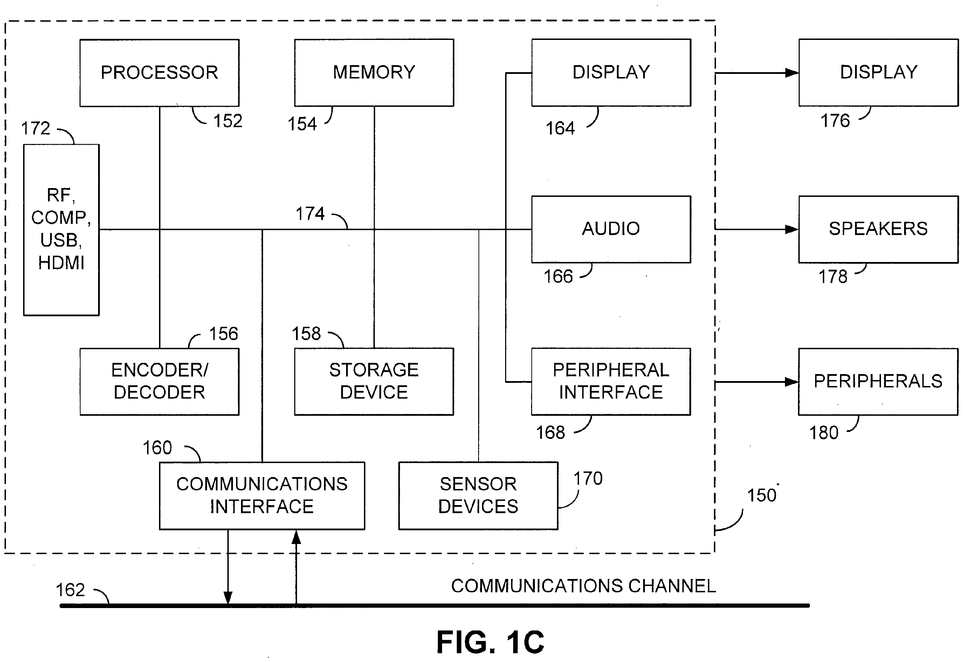

FIG. 1C is a system diagram illustrating an example set of interfaces for a system according to some embodiments. An extended reality display device, together with its control electronics, may be implemented for some embodiments. System 150 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 150, singly or in combination, can be embodied in a single integrated circuit (IC), multiple ICs, and/or discrete components. For example, in at least one embodiment, the processing and encoder/decoder elements of system 150 are distributed across multiple ICs and/or discrete components. In various embodiments, the system 150 is communicatively coupled to one or more other systems, or other electronic devices, via, for example, a communications bus or through dedicated input and/or output ports. In various embodiments, the system 150 is configured to implement one or more of the aspects described in this document.

The system 150 includes at least one processor 152 configured to execute instructions loaded therein for implementing, for example, the various aspects described in this document. Processor 152 may include embedded memory, input output interface, and various other circuitries as known in the art. The system 150 includes at least one memory 154 (e.g., a volatile memory device, and/or a non-volatile memory device). System 150 may include a storage device 158, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 158 can include an internal storage device, an attached storage device (including detachable and non-detachable storage devices), and/or a network accessible storage device, as non-limiting examples.

System 150 includes an encoder/decoder module 156 configured, for example, to process data to provide an encoded video or decoded video, and the encoder/decoder module 156 can include its own processor and memory. The encoder/decoder module 156 represents module(s) that can be included in a device to perform the encoding and/or decoding functions. As is known, a device can include one or both of the encoding and decoding modules. Additionally, encoder/decoder module 156 can be implemented as a separate element of system 150 or can be incorporated within processor 152 as a combination of hardware and software as known to those skilled in the art.

Program code to be loaded onto processor 152 or encoder/decoder 156 to perform the various aspects described in this document can be stored in storage device 158 and subsequently loaded onto memory 154 for execution by processor 152. In accordance with various embodiments, one or more of processor 152, memory 154, storage device 158, and encoder/decoder module 156 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 152 and/or the encoder/decoder module 156 is used to store instructions and to provide working memory for processing that is needed during encoding or decoding. In other embodiments, however, a memory external to the processing device (for example, the processing device can be either the processor 152 or the encoder/decoder module 152) is used for one or more of these functions. The external memory can be the memory 154 and/or the storage device 158, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 150 can be provided through various input devices as indicated in block 172. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia interface (HDMI) input terminal. Other examples, not shown in FIG. 1C, include composite video.

In various embodiments, the input devices of block 172 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 150 to other electronic devices across USB and/or HDMI connections. It is to be understood that various aspects of input processing, for example, Reed-Solomon error correction, can be implemented, for example, within a separate input processing IC or within processor 152 as necessary. Similarly, aspects of USB or HDMI interface processing can be implemented within separate interface ICs or within processor 152 as necessary. The demodulated, error corrected, and demultiplexed stream is provided to various processing elements, including, for example, processor 152, and encoder/decoder 156 operating in combination with the memory and storage elements to process the datastream as necessary for presentation on an output device.

Various elements of system 150 can be provided within an integrated housing, Within the integrated housing, the various elements can be interconnected and transmit data therebetween using suitable connection arrangement 174, for example, an internal bus as known in the art, including the Inter-IC (I2C) bus, wiring, and printed circuit boards.

The system 150 includes communication interface 160 that enables communication with other devices via communication channel 162. The communication interface 160 can include, but is not limited to, a transceiver configured to transmit and to receive data over communication channel 162. The communication interface 160 can include, but is not limited to, a modem or network card and the communication channel 162 can be implemented, for example, within a wired and/or a wireless medium.

Data is streamed, or otherwise provided, to the system 150, in various embodiments, using a wireless network such as a Wi-Fi network, for example IEEE 802.11 (IEEE refers to the Institute of Electrical and Electronics Engineers). The Wi-Fi signal of these embodiments is received over the communications channel 162 and the communications interface 160 which are adapted for Wi-Fi communications. The communications channel 162 of these embodiments is typically connected to an access point or router that provides access to external networks including the Internet for allowing streaming applications and other over-the-top communications. Other embodiments provide streamed data to the system 150 using a set-top box that delivers the data over the HDMI connection of the input block 172. Still other embodiments provide streamed data to the system 150 using the RF connection of the input block 172. As indicated above, various embodiments provide data in a non-streaming manner. Additionally, various embodiments use wireless networks other than Wi-Fi, for example a cellular network or a Bluetooth network.

The system 150 can provide an output signal to various output devices, including a display 176, speakers 178, and other peripheral devices 180. The display 176 of various embodiments includes one or more of, for example, a touchscreen display, an organic light-emitting diode (OLED) display, a curved display, and/or a foldable display. The display 176 can be for a television, a tablet, a laptop, a cell phone (mobile phone), or other device. The display 176 can also be integrated with other components (for example, as in a smart phone), or separate (for example, an external monitor for a laptop). The other peripheral devices 180 include, in various examples of embodiments, one or more of a stand-alone digital video disc (or digital versatile disc) (DVR, for both terms), a disk player, a stereo system, and/or a lighting system. Various embodiments use one or more peripheral devices 180 that provide a function based on the output of the system 150. For example, a disk player performs the function of playing the output of the system 150.

In various embodiments, control signals are communicated between the system 150 and the display 176, speakers 178, or other peripheral devices 180 using signaling such as AV.Link, Consumer Electronics Control (CEC), or other communications protocols that enable device-to-device control with or without user intervention. The output devices can be communicatively coupled to system 150 via dedicated connections through respective interfaces 164, 166, and 168. Alternatively, the output devices can be connected to system 150 using the communications channel 162 via the communications interface 160. The display 176 and speakers 178 can be integrated in a single unit with the other components of system 150 in an electronic device such as, for example, a television. In various embodiments, the display interface 164 includes a display driver, such as, for example, a timing controller (T Con) chip.

The display 176 and speaker 178 can alternatively be separate from one or more of the other components, for example, if the RF portion of input 172 is part of a separate set-top box. In various embodiments in which the display 176 and speakers 178 are external components, the output signal can be provided via dedicated output connections, including, for example, HDMI ports, USB ports, or COMP outputs.

The system 150 may include one or more sensor devices 168. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 150 is used as the control module for an extended reality display (such as control modules 124, 132), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 152 or by hardware, or by a combination of hardware and software. As a non-limiting example, the embodiments can be implemented by one or more integrated circuits. The memory 154 can be of any type appropriate to the technical environment and can be implemented using any appropriate data storage technology, such as optical memory devices, magnetic memory devices, semiconductor-based memory devices, fixed memory, and removable memory, as non-limiting examples. The processor 152 can be of any type appropriate to the technical environment, and can encompass one or more of microprocessors, general purpose computers, special purpose computers, and processors based on a multi-core architecture, as non-limiting examples.

Advances in 3D capturing and rendering technologies are enabling new applications and services in the fields of autonomous driving, cultural heritage archival, immersive telepresence, and virtual/augmented reality. Point clouds have arisen as one of the main 3D scene representations for such applications. A point cloud frame includes a set of 3D points, each point being represented with its 3D position and possibly several attributes such as color, transparency, and

EP 4 636 611 A1

reflectance.

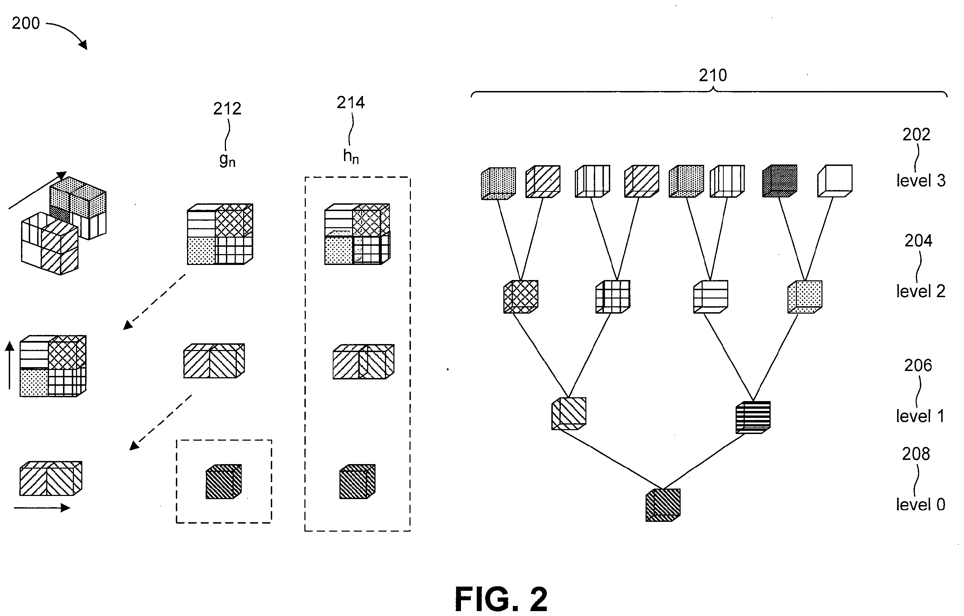

FIG. 2 is a schematic illustration showing an example region-adaptive hierarchical transform (RAHT) process. A standardization activity for point cloud compression is carried out by the ISO/IEC JTC1/SC29/WG7 "MPEG 3D Graphics and Haptics Coding" group (Graziosi, D., et al., *An Overview of Ongoing Point Cloud Compression Standardization Activities: Video-Based (V-PCC) and Geometry-Based* (G-PCC), 9 APSIPA TRANSACTIONS ON SIGNAL AND INFORMATION PROCESSING 1-17 (2020) ("*Graziosi*")), with the standard *Information Technology - Coded Representation of Immersive Media Part 9: Geometry-Based Point Cloud Compression,* ISO/IEC - 23090-9 (2022) *("ISO/IEC 23090-9"),* which is part of the ISO/IEC 23090 series on coded representations of immersive media. The region-adaptive hierarchical transform (RAHT) is one of the two transforms for attribute encoding in G-PCC (de Queiroz, R. and Chou, P. A., *Compression* of *3D Point Clouds Using a Region-Adaptive Hierarchical Transform,* 25 IEEE TRANSACTIONS ON IMAGE PROCESSING 3947-3956 (2016) ("de *Queiroz*")).

FIG. 2 shows an example RAHT transform process 200 performed for a $2\times2\times2$ block. This example is from *Graziosi,* p. 11. According to *Graziosi,* the RAHT is performed on the occupancy tree (octree) representation of the point cloud, starting from the leaves of the octree (highest level: level 3 (202) in FIG. 2) and proceeding backwards until reaching the root (lowest level: level 0 (208) in FIG. 2). At each node, the transform is performed in 3 steps - along each of the x, y, and z directions - to generate low-pass coefficients ($g_n$) and high-pass coefficients ($h_n$), as depicted in FIG. 2.

The transform performed in the x, y, and z directions is indicated by the 3 arrows pointing in the respective directions on the very left side of FIG. 2. The "$g_n$" column 214 of FIG. 2 depicts the generation of low-pass coefficients. The "$h_n$" column 212 of FIG. 2 depicts the generation of high-pass coefficients.

The right side of FIG. 2 shows the 2x2x2 block in octree format 210. Level 3 (202) shows the 8 sub-blocks of the original 2x2x2 block that appears in the upper left corner of FIG. 2. Level 2 (204) shows 4 sub-blocks associated with the generation of the first set of low-pass coefficients ($g_n$). Level 1 (206) shows 2 sub-blocks associated with the generation of the second set of low-pass coefficients ($g_n$). Level 0 (208) shows 1 sub-block associated with the generation of the third set of low-pass coefficients ($g_n$).

RAHT uses the tree structure shown in FIG. 2 to encode the attributes. For some embodiments, the coefficients that are used by the RAHT transform are defined in a standard. Attributes are encoded in a hierarchical manner, layer by layer, from the tree root to the leaves. After encoding a layer, that information is available at the encoder and the decoder and is used to predict the attributes of the next layer. Thus, RAHT performs an intra-frame prediction using the attributes of the nodes in the previous layer and the nodes already encoded/decoded in the current layer.

The present application is understood to be novel with regard to the ability to modify the prediction that will be used in the codec. This prediction may be used with most, if not all, transformations that follow the same hierarchical order from tree root to leaves. The weights used on the prediction may be calculated on-the-fly (or at runtime) by a small neural network (NN). For some embodiments, the weights may be pre-calculated for use with multi-pass operation mode. An advantage is that the weights may be trained to adapt to the current type of data (as opposed to the original prediction, which is the same for every point cloud).

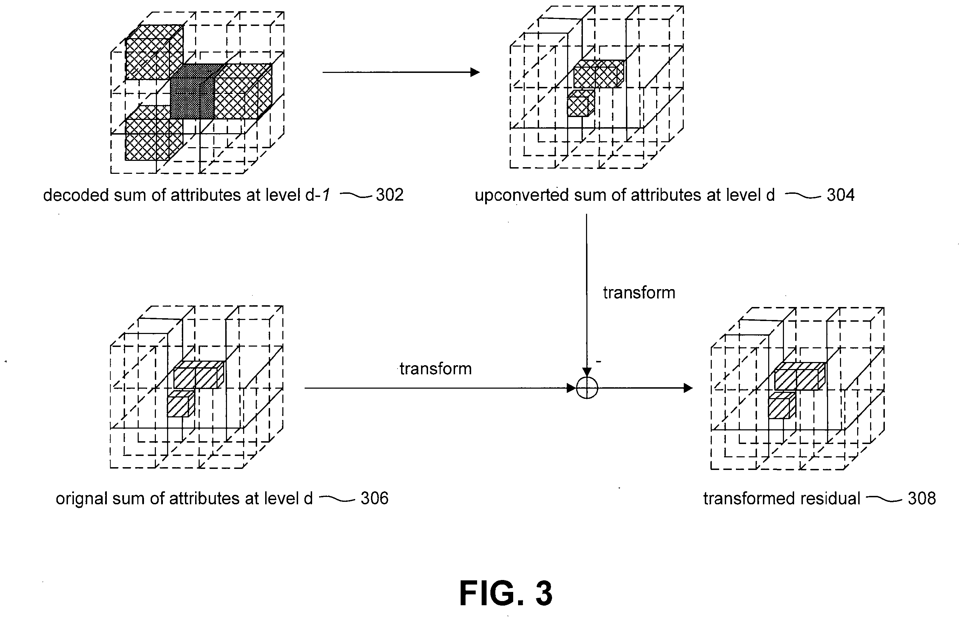

FIG. 3 is a schematic illustration showing an example upconverted transform domain prediction in a RAHT process. This example is from *Graziosi,* p. 11. In Geometry-based Point Cloud Compression (G-PCC), an up-sampled transform domain prediction was introduced to improve RAHT encoding coding efficiency according to G-PCC *CE13.18 Report on Upsampled Transform Domain Prediction in RAHT,* ISO/IEC JTC1/SC29 WG11, Document m49380 (2019) ("*m49380*").

In FIG. 3, a process 300 is performed for each block. An upconverted sum of attributes for a current level d (304) is calculated from a decoded sum of attributes for a lower level d-1 (302). This step is shown at the top of FIG. 3. A transform is then performed on the upconverted sum of attributes for current level d (304). In parallel, a transform is performed on an original sum of attributes for level d (306). These two sets of transformed sum of attributes for level d are subtracted from one another to generate a set of transformed residuals 308. Stated differently, the transformed and upconverted sum of attributes for current level d is used to predict the transformed (original) sum of attributes for level d. This prediction generates high-pass residuals that may be further quantized and entropically encoded. The upconverting process is accomplished by using a weighted average of neighboring nodes.

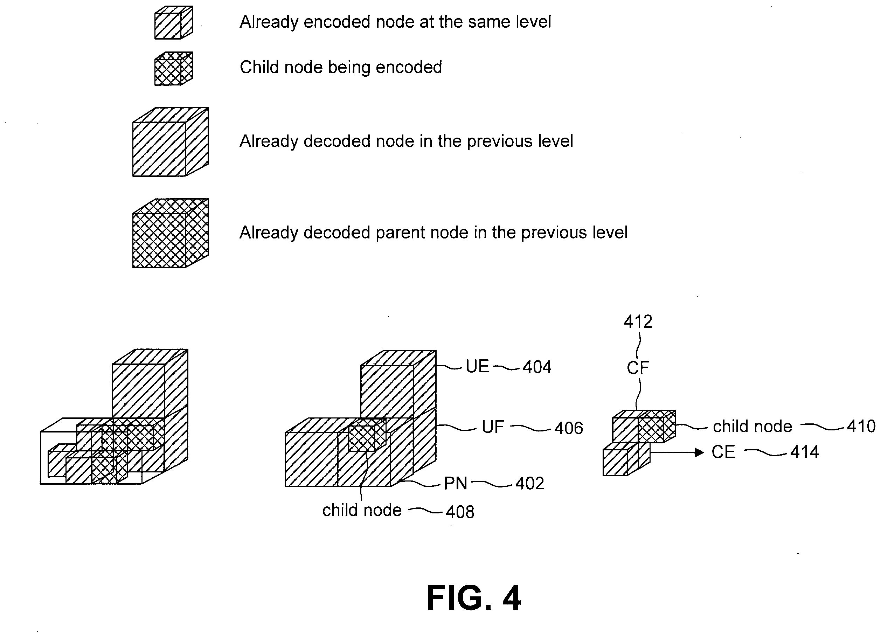

FIG. 4 is a schematic illustration showing an example representation of a 3D RAHT tree according to some embodiments.

The nodes used to predict the attribute of a child node are the Parent Node (PN), Uncle Face (UF), Uncle Edge (UE), Cousin Face (CF), and Cousin Edge (CE).

The Parent Node (PN) 402 is a node at the previous layer that is the parent of the child node 408.

An Uncle Face (UF) node 404 shares a face of a node at the previous layer that has one face touching one of the child node's faces.

An Uncle Edge (UE) node 406 shares an edge of a node at the previous layer that has one edge touching one of the child node's edges.

A Cousin Face (CF) node 412 shares a face of a node at the same layer that has one face touching one of the child node's faces and has a different parent node than the child node 410.

A Cousin Edge (CE) node 414 shares an edge of a node at the same layer that has one edge touching one of the child node's edges and has a different parent node than the child node 410.

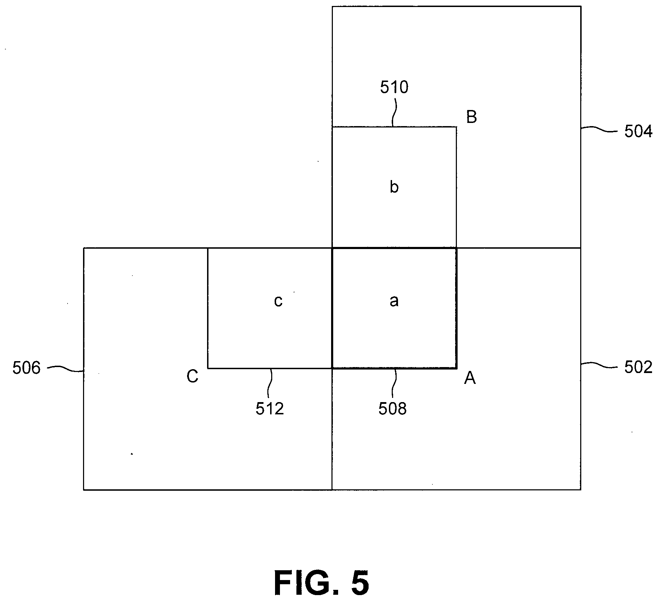

FIG. 5 is a schematic illustration showing an example parent-child node tree according to some embodiments. In the example shown in FIG. 5, block A (502) is a parent node to sub-block a (508). Similarly, block B (504) is a parent node to sub-block b (510), and block C (506) is a parent node to sub-block c (512). Furthermore, blocks a, b, and c are all child nodes. FIG. 5 shows a 2D representation of what was shown in FIG. 3 to aid with understanding.

A child node attribute is estimated by a weighted average, which is computed as shown in Eq. 1:

$$attr_{child} = \frac{1}{\sum_i W_i} \sum_i W_i \, attr_i \qquad (1)$$

Eq.1 shows a computing of a weighted sum of RAHT predictors. The weights depend on the type of node used for interpolation. All nodes of the same kind have the same weight. Referring back to FIG. 4, nodes PN, UF, UE, CF, and CE all have the same kind of weight. These weights may be defined as WPN, WUF, WUE, WCF, and WCE. Also, these weights are all constants. The sum of attributes is multiplied by the weights, and the sum is normalized, which is a dividing by the sum of the weights. This computation is shown in Eq. 1.

This weighted average is standardized for any point cloud and is the same for all levels during the encoding and decoding of the point cloud. The fixed weights may be replaced with adaptive weights that may be changed according to the point cloud. This adaptative behavior may benefit the compression scheme and may generate predictions that are closer to the real value of the child that is coded.

Since the weights are standardized, there are no content adaptive weights or level adaptive weights, which means the generalized weights may not be optimal for a determined point cloud.

One goal is to be able to train these weights on-the-fly (such as at runtime) so that they may be adapted to the point cloud and produce a better prediction. Such a point cloud may then be encoded. The fixed weights may be replaced by MLPs that mimic the weighted average multiplication. For some embodiments, backpropagation may be performed, and the weights may be updated during encoding and decoding.

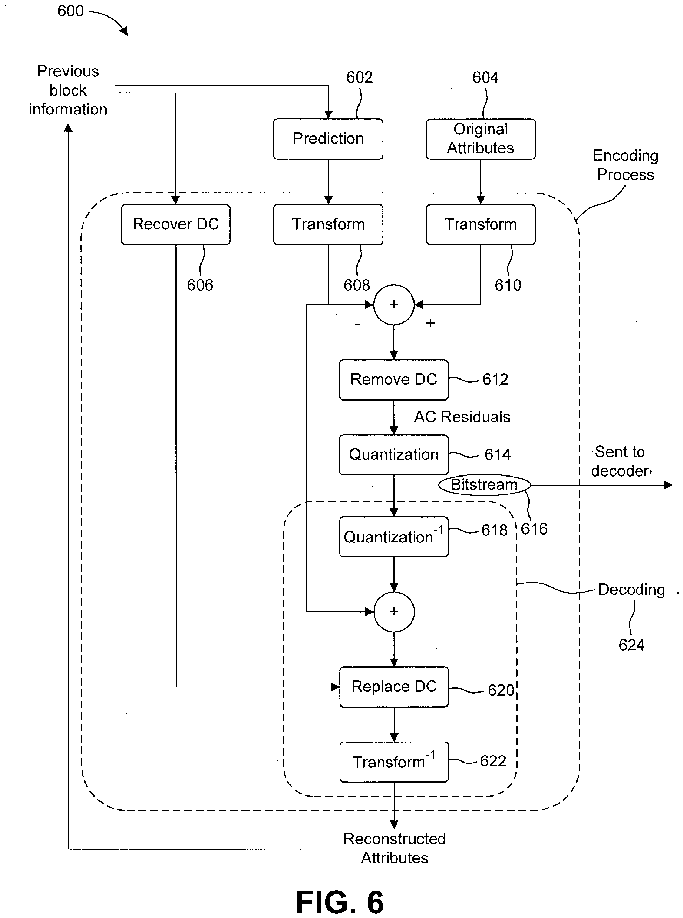

FIG. 6 is a process diagram illustrating an example G-PCC encoding process according to some embodiments. In the current scheme for prediction, several operations are performed to encode each level of the RAHT tree and obtain a good prediction for the next level. The attributes for a block have a DC component and an AC component. The DC component of a node is obtained by the weighted average of its children's DC components, and is also obtained by the inverse transform from the previous levels. The DC component is obtained by the weighted average of the child nodes (or blocks), in which the weight in this case is the node weight (the number of associated voxels). The AC component are the remaining coefficients. The Recover DC block 606 separates out the DC component of the attributes. We then calculate the residual of the remaining AC component which will be encoded. The DC component (or value) is separated because the DC component is already known and is not needed to code the residual of the AC components. In this case, the geometry is only used to know the weight of the parent node. With the available real data in the encoder, a transformation is performed. Using the context provided by the previously encoded blocks, the AC component is predicted. The predicted AC value is transformed and then subtracted from the real AC value to obtain the residuals for the AC component. These residuals are quantized and coded in a bitstream for the decoder as shown on the right side of FIG. 6.

For some embodiments, the encoding process happens inside the GPCC code. The encoding process 600 performs an attribute prediction 602 based on the information on the previous encoded blocks. The prediction 602 is performed by fixed weights in a weighted average formula, in which the weights depend on the relationship of the previous decoded attribute and the attribute being predicted (if they are in the same layer and what their position is relative to each other). The encoding process performs the transform 608, 610 on both the predicted attributes and the original attributes 604 to encode the residuals. The Remove DC block 612 outputs the AC residuals, and the AC residuals go through a quantization block 614 to generate a bitstream 616. The encoding process 600 then performs a decoding process 624 to produce the (necessary) information for subsequent blocks to be encoded.

For some embodiments, the decoding process 624 sends the bitstream 616 through a dequantization block 618. The transformed prediction values are added back and the output is sent through a replace DC block 620. The output of the replace DC block 620 is passed through an inverse transform block 622 to generate the reconstructed attributes.

To ensure that the same prediction is obtained in the decoder, the values used for the prediction are reconstructed in the encoder to provide context for the next blocks/levels. These reconstructed values are labeled "Reconstructed Attributes" in FIG. 6. These reconstructed attributes are fed back into the encoder as previous block information via the feedback loop of FIG. 6. This reconstruction process may be similar to or identical to the decoder (or a portion thereof) for some embodiments.

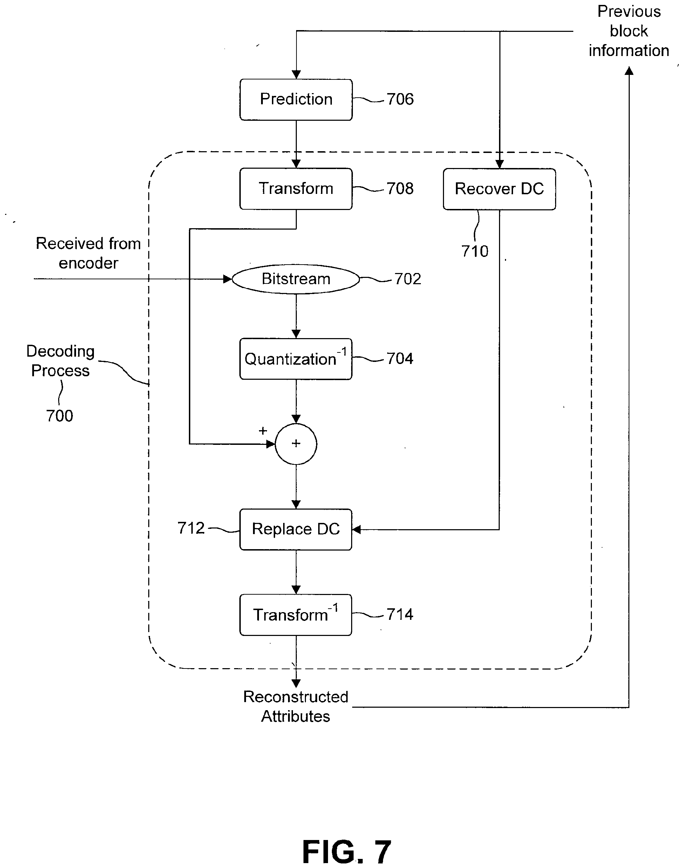

FIG. 7 is a process diagram illustrating an example G-PCC decoding process according to some embodiments. The decoder 700 receives/obtains the transmitted bitstream 702, which is shown on the left side of FIG. 7. The decoder 700 performs dequantization 704 on the received bitstream 702. Using the context provided by the previously decoded blocks, the AC component is predicted via a prediction block 706. The predicted AC value is transformed via a transform block 708 and then added to the dequantized value to generate a summed value. The DC component of the attributes for a block is recovered from the previous point cloud blocks via a recover DC block 710 and replaced in the summed value via a replace DC block 712. The output of this replacement is passed through an inverse transform block 714 to generate reconstructed attributes. These reconstructed attributes are fed back into the decoder as previous block information via the feedback loop of FIG. 7.

One goal has been to enhance prediction of the AC attributes. Since DC components may be obtained directly by using the inheritance from the parent nodes, they have not been a focus of the prediction. Since the input for the prediction and the reconstructed value are both on the encoder side and on the decoder side, another goal is to replace the weighted mean prediction (Eq. 1) with a neural network that takes as inputs the weights of the children and the attributes of the previously-decoded blocks. Such a replacement may generate better predictions of the AC components.

To make the prediction adaptable to the point cloud during encoding and decoding, instead of having fixed weights for the prediction network, the weights may be optimized on-the-fly. For some embodiments, the weights may be pre-calculated for use with multi-pass operation mode, which is described below. Such adaptation means that the network is going to be trained at the same time as the components are encoded and decoded. Each block that is (en)coded and/or decoded by the scheme will cause the weights to update and find an optimal value for a specific point cloud. Such a coding scheme may be better adapted to the point cloud.

Since there is access to both data (the previously decoded blocks and the weights of the children) in the encoding and decoding side, the network does not need to transmit any of the weights through a secondary bitstream. This is because each side is able to perform the optimization. By doing this process, the weights that are being used for the prediction are assumed to be adapted to the point cloud in question. Using the previously decoded blocks and the weights of the children, a prediction may be performed and the attributes may be reconstructed on both sides of the encoder and the decoder. Since this prediction may be determined and since there is access to the ground truth (the reconstructed attributes), the network may be adapted to reduce the error between the prediction and the reconstructed attributes.

For some embodiments, the decoding process happens inside the GPCC code. The decoding process performs an attribute prediction based on the information on the previous decoded blocks. The prediction is performed by fixed weights in a weighted average formula, the same as done in the encoder. The decoding process performs the transform on the predicted attributes and decode the residual information from the bitstream, producing the (necessary) information for the subsequent blocks to be decoded.

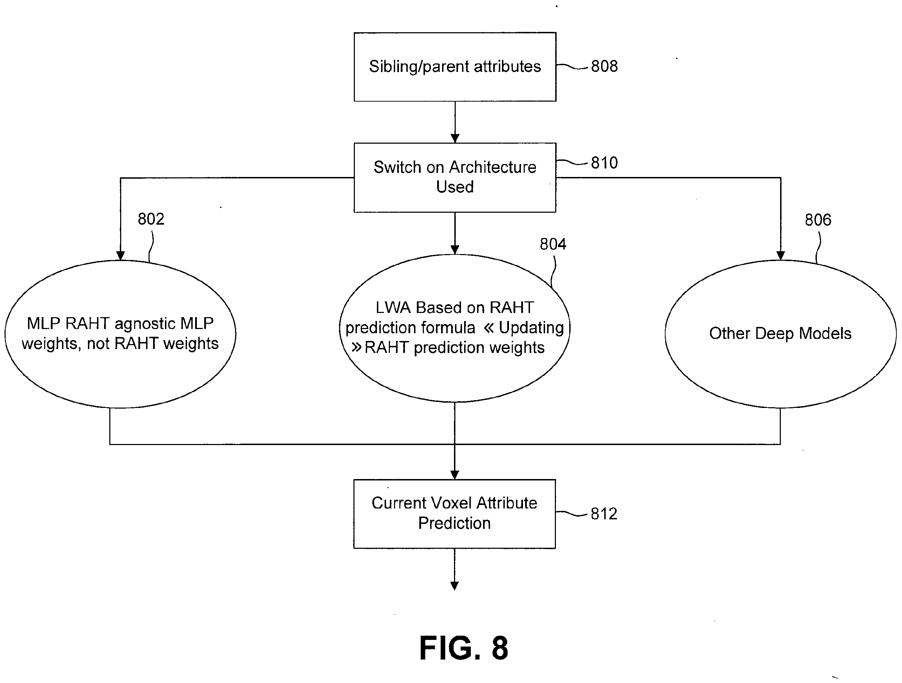

FIG. 8 is a process diagram illustrating an example switch process for selecting a weight prediction process according to some embodiments. Fixed weights prediction may be replaced by different variants of learning-based architectures. Sibling/parent attributes 808 are used to determine and switch 810 on the architecture used. The first variant / operational mode is a multilayer perceptron (MLP) process 802 that takes as input the information present in previous blocks to perform a prediction. In this first variant, the inner weights of the MLP are learned. The second variant / operational mode is a Learned Weighted Average (LWA) process 804 that mimics the formula used in the G-PCC to perform the prediction. In this second variant, the weights of the prediction formula are learned by the LWA. The third variant / operational mode is another learning-based model process 806 with deeper layers. After performing one of these weight prediction processes 802, 804, 806, the current voxel attribute prediction 812 is performed.

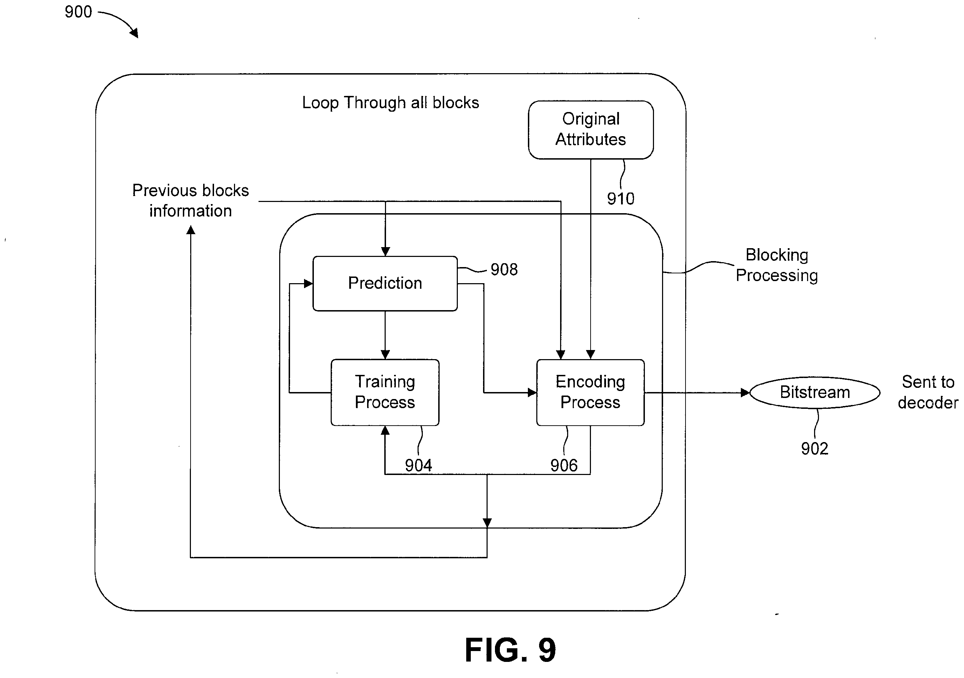

FIG. 9 is a process diagram illustrating an example process for on the fly learning of the prediction weights according to some embodiments. For some embodiments, there may be two operation modes using a learning-based architecture. The first mode is the "on the fly" learning of the prediction weights. FIG. 9 shows the encoding process 906 in such a mode. The architecture 900 in FIG. 9 may be inserted into a prediction block in this framework. For some embodiments, a prediction process 908 may be used with block processing. The process loops through each block of a point cloud while training the chosen prediction model via a training process 904. The previous blocks information, the original attributes 910, and the predicted attributes are inputs into the encoding process 906. The process is an "on the fly" training mode because the bitstream 902 is produced and sent while the model is training. The loss function is computed using the decoded attributes so that the decoder may mimic the "on the fly" learning.

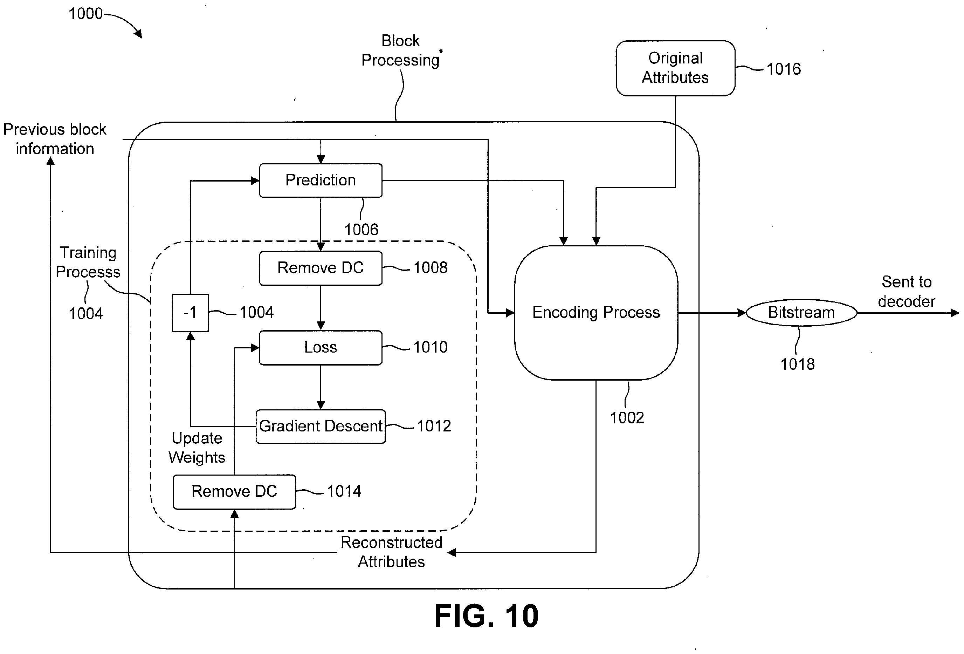

FIG. 10 is a process diagram illustrating an example encoding process with a training / optimizing of weights process according to some embodiments. In FIG. 10, the transform, quantization, inverse quantization, reincorporate/replace DC, and inverse transform blocks shown in FIG. 6 have been replaced by an encoding process block 1002.

FIG. 10 depicts an example of what happens inside the training process and offers a closer look at the block processing part of the framework. The encoding process shown in FIG. 10 may be the same as the encoding process shown in FIG. 6, but the prediction now has learning weights that adapt to the current point cloud being coded. The DC component is removed from both the reconstructed attributes and the prediction because only the AC components of the attributes are used to calculate the loss and update the weights of the prediction. The new weights are used to encode the next blocks.

FIG. 10 shows a process 1000 of prediction and optimizing of the weights on-the-fly on the encoder side of the architecture. The "-1" block 1004 represents a delay of 1 time period for the new weights to be taken into account. Each Remove DC block 1008, 1014 adds a constant value to the attributes in a way that the DC component of the attributes is 0. Each Remove DC block 1008, 1014 outputs the resulting attributes.

For example, suppose the block for level D, which is represented in the Real block, is to be encoded. The previously decoded information is obtained (level D-1) to perform prediction and to recover the DC component. With the prediction, the real values, and the DC component, the encoding process (which is the same as in FIG. 6) is performed. For some embodiments, the encoding process 1002 takes the original attributes 1016, the prediction, and the previous block information as inputs. The bitstream 1018 is sent. The attributes are reconstructed from the AC residuals calculated in the encoding process and the DC recovered from the previous blocks (level D-1).

With the reconstructed attributes and the prediction result from the prediction block 1006, a loss function is calculated. The loss function has the goal of minimizing the error between the predicted attributes and the reconstructed attributes (meaning that the residual will be closer to 0 and the bitstream will be smaller). After calculating the loss, a gradient descent 1012 is applied on the weights of the neural network present in the prediction block 1006. The DC component in the prediction result and the DC component in the reconstructed attributes are removed, to calculate the loss via the loss block 1010. This removal is done because the DC component is already known. The delay of -1 means that the new weights that will be updated in the prediction block 1206 will only be available for the encoding of block D+1.

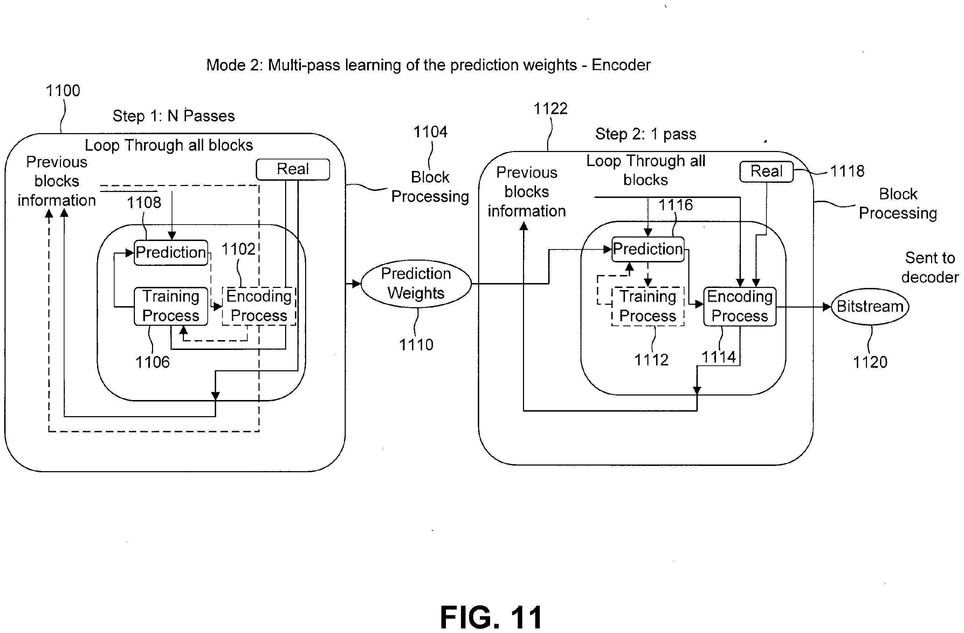

FIG. 11 is a process diagram illustrating an example process for multi-pass learning of the prediction weights for the encoder according to some embodiments. FIG. 11 depicts the second operating mode for a "multi-pass" encoder. The second operation mode performs multi-pass learning of the prediction weights. The architecture shown in FIG. 11 may be inserted into a prediction block in this framework. In step 1, the process 1100 via the block processing block 1104 loops through all the blocks of the point cloud while training for the chosen prediction model using the training process 1106 and the prediction block 1108 without performing any encoding. The encoding process 1102 is disabled for step 1, hence the dotted lines on the left side of FIG. 11. For some embodiments, the multi-pass learning mode may loop through all the blocks of the point cloud for the training process 1106 multiple times. After the training is done, the weights of the prediction model are extracted. These prediction weights 1110 are sent to the decoder as additional information in the bitstream because the prediction weights are used in step 2. All the blocks of the point cloud were passed through the prediction weights in step 1. This step 2 (or last) pass process 1122 uses the trained weights and encodes the block residual information. On the step 2 (or last) pass, no training is performed. Hence, the training process 1112 is disabled and shown as dotted lines on the right side of FIG. 11. For some embodiments, the encoding process 1114 takes as inputs the output of the predication block 1116, the real attributes 1118, and the previous blocks information to generate output bits for the bitstream 1120.

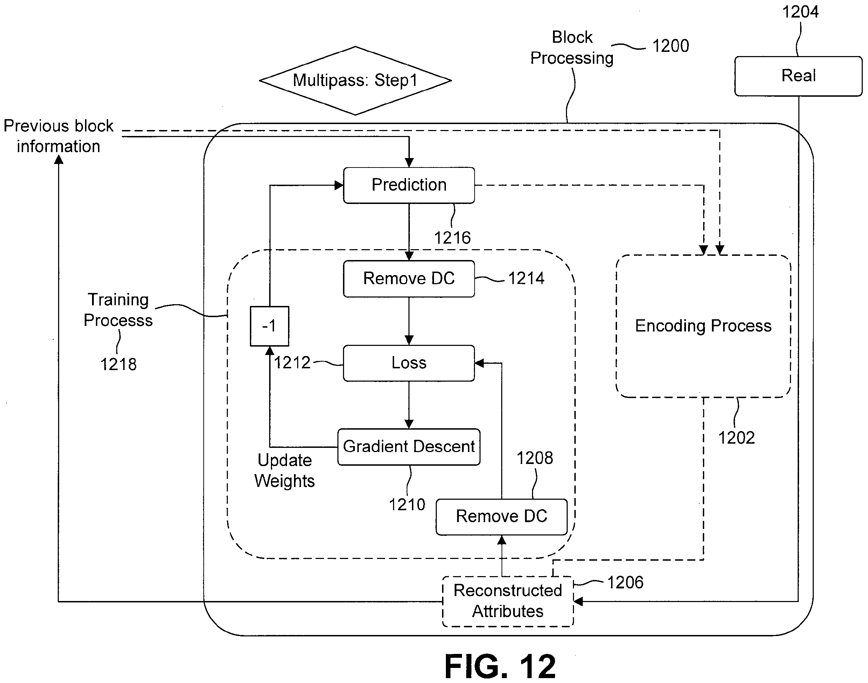

FIG. 12 is a process diagram illustrating an example process for the first step of multi-pass mode on the encoder side according to some embodiments. FIG. 12 depicts what happens in the first step of the multi-pass encoder. FIG. 12 offers a closer look at the block processing 1200 part of the framework on the first step of the multi-pass mode and provides details on the training process 1218. Hence, the encoding process 1202 is disabled and shown as dotted lines. The training process 1218 is the same one shown in FIG. 10, but instead of using reconstructed attributes 1206, real (original) values 1204 of the block are used to enhance the training. The DC component is removed from both the real attributes (via a remove DC block 1208) and the prediction (via a remove DC block 1214) because only the AC components of the attributes are used by the loss block 1212 to calculate the loss. The gradient descent block 1210 outputs updated weights for the prediction block 1216.

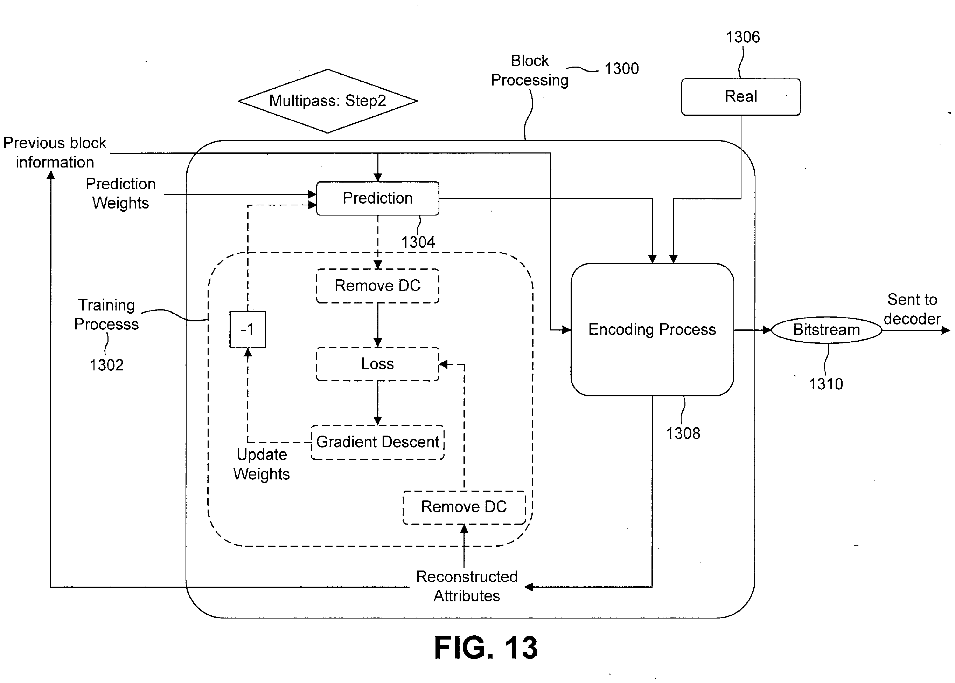

FIG. 13 is a process diagram illustrating an example process for the second step of multi-pass mode on the encoder side according to some embodiments. FIG. 13 depicts what happens in the second step of the multi-pass encode. FIG. 13 offers a closer look at the block processing 1300 part of the framework on the second step of the multi-pass mode. Hence, the training process 1302 is disabled and shown as dotted lines. The training process 1302 was completed in the first step, which is shown in FIG. 12. The prediction block 1304 with the weights produced in the first step are used to complete the encoding process 1308. In this step 2 (or last) pass, the bitstream 1310 with the residuals is produced and sent to the decoder. For some embodiments, the encoding process 1308 takes as inputs the output of the predication block 1304, the real attributes 1306, and the previous blocks information to generate output bits for the bitstream 1310.

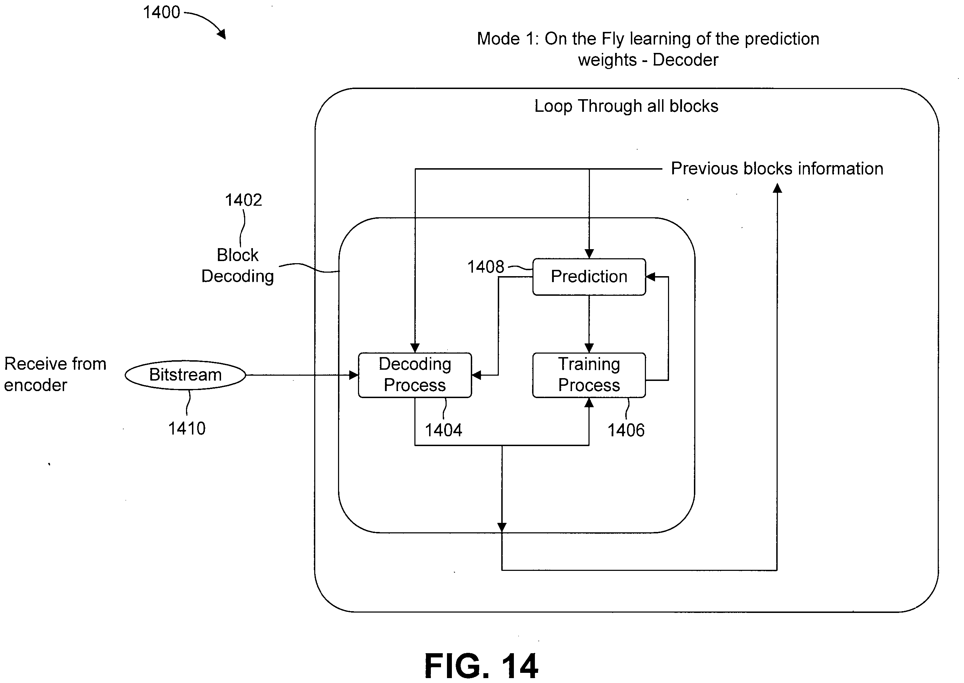

FIG. 14 is a process diagram illustrating an example process for on-the-fly learning of the prediction weights for the decoder according to some embodiments. FIG. 14 depicts what happens in the on-the-fly operating mode on the decoder side. FIG. 14 shows the decoder in the "on the fly" operation mode, the first operation mode. The architecture 1400 shown in FIG. 14 may be inserted in the prediction block. The architecture 1400 needs to match the architecture used in the encoder side of the framework. The block decoding process 1402 loops through all the blocks of the point cloud, recovers the information that was sent from the encoder, and trains the chosen prediction model (via a training process 1406 and a predication block 1408) in the same way the prediction model was trained in the encoder. The "on the fly" learning mode decodes the bitstream 1410 via a decoding process 1404 while the model is training and produces the reconstructed point cloud. The model is trained in the encoding process but also in the decoding process, which removes the need to store trained weights in the bitstream 1410.

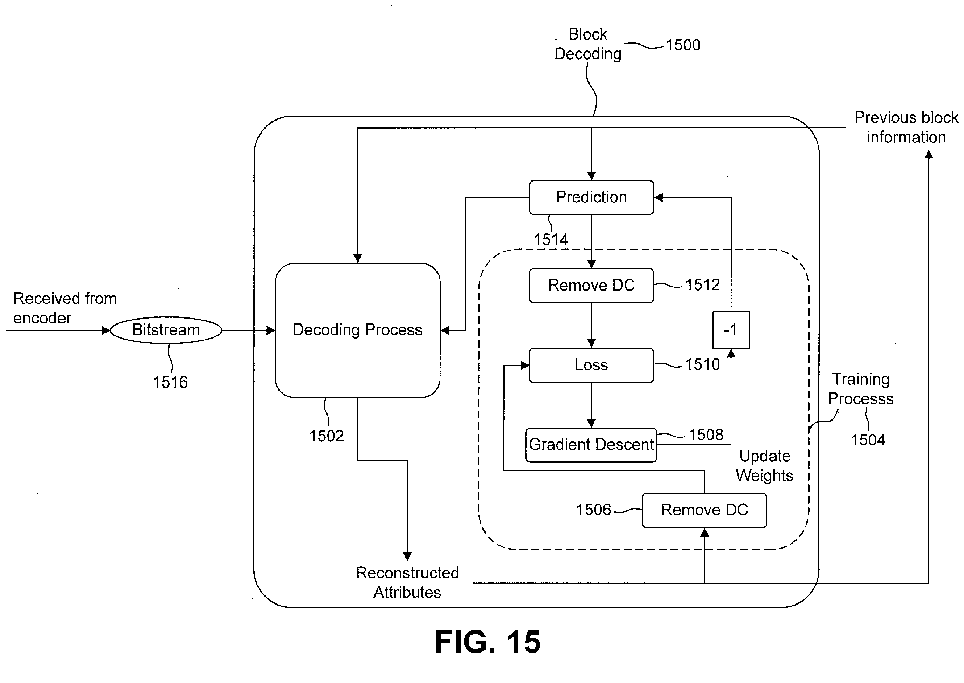

FIG. 15 is a process diagram illustrating an example decoding process with optimizing weights process according to some embodiments. FIG. 15 shows a prediction with on-the-fly learning of the weights on the decoder side of the architecture. The decoder is a mirror of the encoder, enabling on-the-fly training. Again, the output of the Recover DC block is the DC component, which may be calculated from previously decoded information. Each Remove DC block adds a constant value to the attributes in a way that the DC component of said attributes is 0. Each Remove DC block outputs the resulting attributes.

In FIG. 15, the transform, inverse quantization, reincorporate DC, and inverse transform blocks shown in FIG. 7 have been replaced by a decoding process block 1502. By making this replacement, the encoding process is a mirror of the decoding process, which enables optimization of the weights on both the encoder and decoder architectures.

FIG. 15 offers a closer look at what happens in the on-the-fly operating mode on the decoder side. Furthermore, FIG. 15 offers a closer look at the block processing 1500 part of the framework of FIG. 14 and details the training process 1504. The decoding process 1502 (which decodes the bitstream 1516) is the same as in FIG. 7, but the prediction now has learning weights that adapt to the current point cloud being decoded. The DC component is removed from both the reconstructed attributes (via the remove DC block 1506) and the prediction (via the remove DC block 1512) because only the AC components of the attributes are used by the loss block 1510 to calculate the loss. The gradient descent block 1508 outputs updated weights for the prediction block 1514 in the same way the encoder performs this update. The new weights are used to decode the next blocks.

Some embodiments of the network may have different levels of complexity. The architecture used will be present in the decoder. Furthermore, the gradient descent operation is done on both sides.

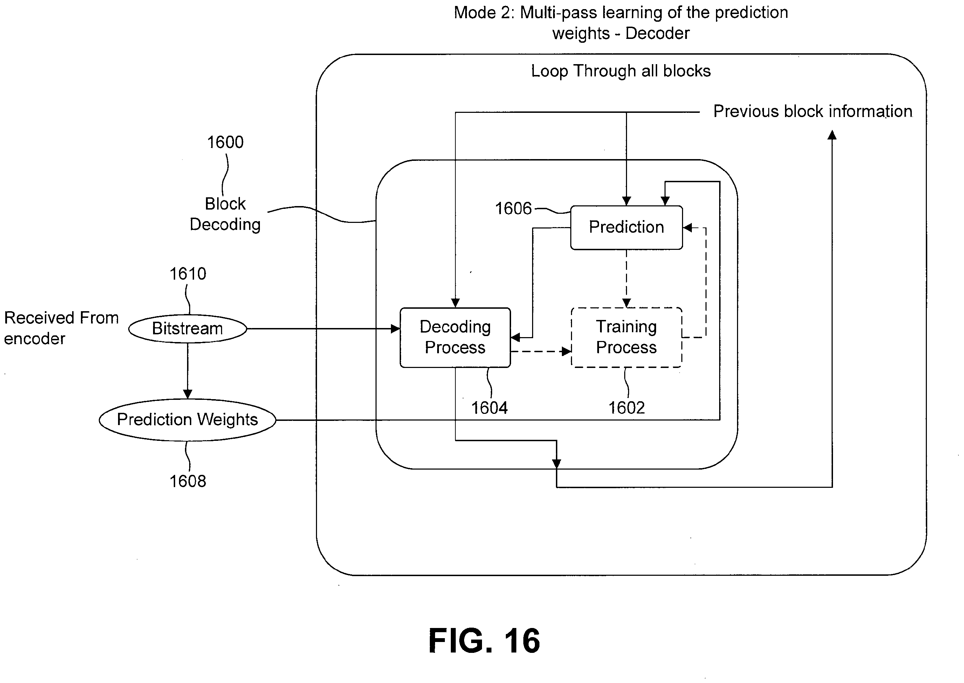

FIG. 16 is a process diagram illustrating an example process for multi-pass learning of the prediction weights for the decoder according to some embodiments. FIG. 16 depicts what happens in the multi-pass/second operating mode on the decoder side. The architecture shown in FIG. 16, which includes a block decoding process 1600, may be inserted in the prediction blocks in this framework. Because the prediction weights 1608 are in the bitstream 1610, they may be recovered and used in the prediction block 1606. Hence, there is no need to train the weights, and the training process 1602 is shown with dashed lines in FIG. 16. The decoding process 1604 and the prediction 1606, with the weights that were received from the encoder, are performed.

**Training**

For some embodiments, the initial weights produce the same results as the current implementation in the GPCC standards, and on-the-fly training is used to optimize the weights. Use of such on-the-fly training impacts the complexity of the encoder and decoder calculations. However, the weights will be adapted on-the-fly to a specific point cloud. A constraint of this mode is that the initialized weights should be the same in both the encoder and decoder. For example, with pre-trained values, or pseudo-random values with the same seed, the initialized weights are the same for the encoder and the decoder.

For some embodiments, the decoder is not modified, and the complexity level of the decoder remains the same. The weights may be learned in a multi-pass fashion. In a first step the correct weights may be learned and added to the bitstream, in the second step the learned weights may be used to encode the residuals and produce the bitstream.

**Learned Weighted Average (LWA)**

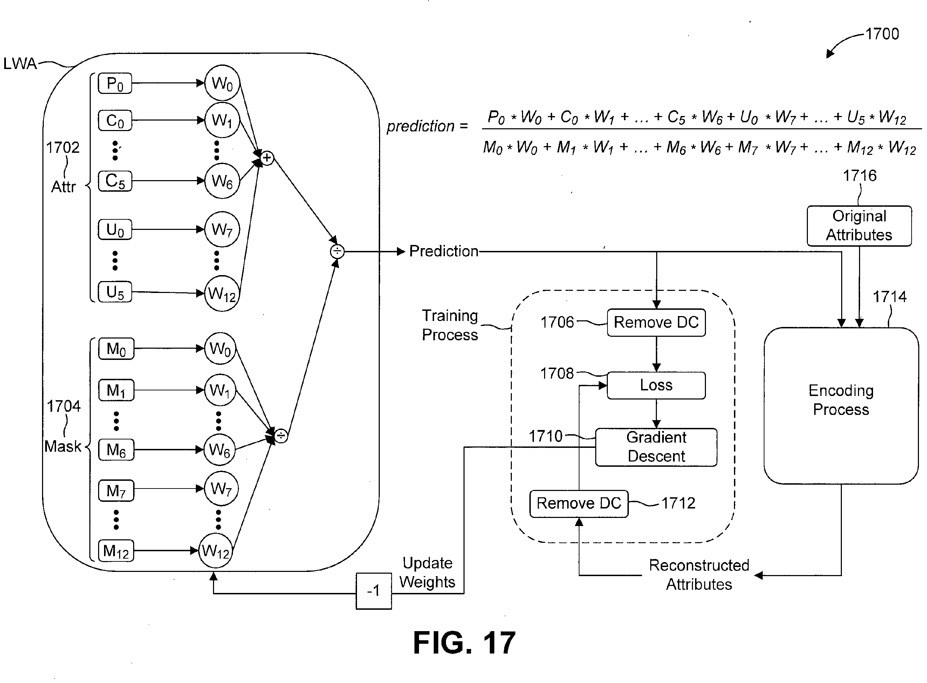

FIG. 17 is a process diagram illustrating an example learning weighted average process with an encoding process according to some embodiments. FIG. 17 depicts what happens in a Learned Weighted Average architecture 1700. In FIG. 17, a weighted average is mimicked by using the attributes of the parents, cousins, and uncles alongside a mask vector. The attribute vector 1702 and the mask vector 1704 are both multiplied by the same set of weights, which are labeled as $w_0 ... w_{12}$. A division operation is performed for both results to determine a prediction. The formula is shown in FIG. 17. With the prediction, the loss block 1708 calculates the loss, and the gradient descent 1710 is performed to update the weights, which is also shown in FIG. 10.

For some embodiments, the prediction and the original attributes 1716 are inputs into the encoding process 1714, which outputs reconstructed attributes. The DC components are removed from the reconstructed attributes via a remove DC block 1712 and from the prediction via a remove DC block 1706.

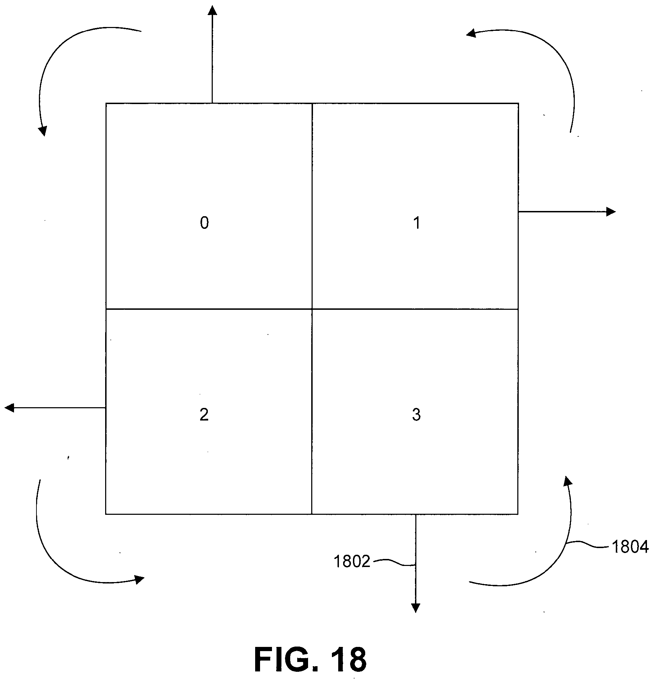

FIG. 18 is a schematic illustration showing an example input vector consideration order process according to some embodiments. For some embodiments, a machine learning algorithm named LWA that mimics a weighted average is used for the prediction. This architecture mimics the original implementation of G-PCC. The network is initialized with the weights described in G-PCC for the direct parent, the "uncles", and the "cousins" of the current block to be predicted. In total, there are (1 + 6 + 6 = 13) possible values that are used in a prediction. But, the maximum number of values to be used is 7 because every time a "cousin" is used in a prediction, its parent is ignored. This nuance means that an uncle node is replaced with a cousin node for prediction. Keeping that in mind, the network is designed to take two vectors as an input.

The first vector is the 13 attributes, which are the 13 possible values that may be used for a prediction. The second vector is a binary mask, which indicates which attributes are used. For some embodiments, the order shown in FIG. 18 is the order used to fill the attributes of the network.

FIG. 18 shows the order in which to consider the uncles and cousins. Consider a 2D projection of a 3D block. Start with the direct parent by following a straight arrow 1802, and follow the order of the curved arrows 1804 to know where to spin to to fill the attributes of the network. If one of the cousins is not there, fill the attribute of the uncle. If one of the uncles is not there, replace the attribute with a zero. Follow the coplanar uncles first, and continue to the other planes. Examples of this process are shown in later figures.

For example, if the voxel location is at position 0 of FIG. 18, start going upwards and spin counterclockwise to fill up the cousins and the uncles. If the voxel location is at position 1, then start by going to the right, and then spin counterclockwise, and continue. FIG. 18 shows an example process to define the order in which the cousins and uncles are enumerated.

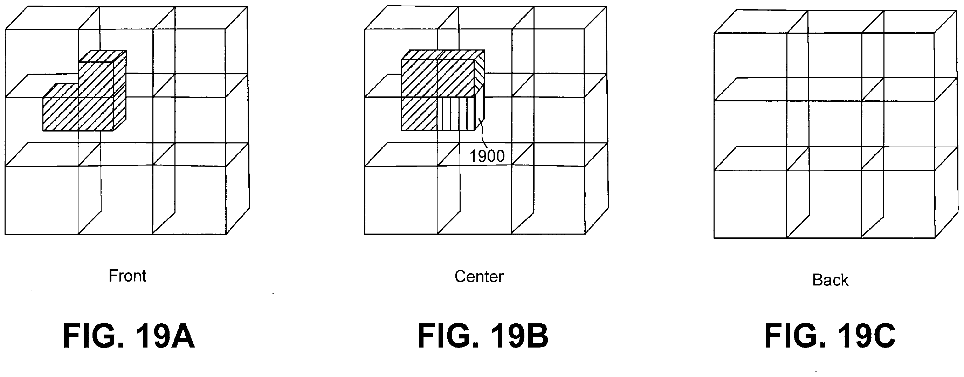

FIGs. 19A-19C are schematic illustrations showing an example 3D view of block prediction consideration order according to some embodiments. FIGs. 19A-19C show three layers (front, center, and back) of a 3x3x3 cube. A first example, in which all the cousins and uncles are available, is shown in FIGs. 19A-19C. The lower right sub-block 1900 shown in FIG. 19B is the block with associated attributes to be predicted in the current state. For this example, a first set of uncles and cousins of the block to be predicted are also shown.

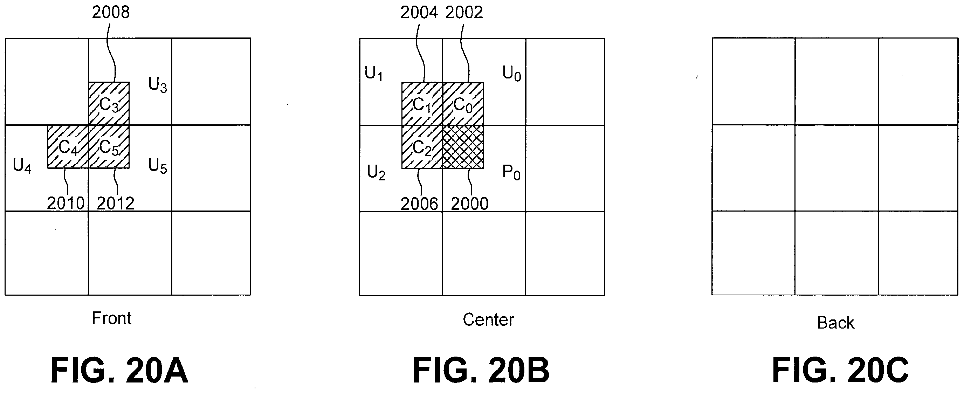

FIGs. 20A-20C are schematic illustrations showing an example 2D view of block prediction consideration order according to some embodiments. FIGs. 20A-20C taken together show an example 2D view that corresponds to the 3D view shown in FIGs. 19A-19C. For some embodiments, with all cousins available, the inputs of the network $\theta$ are shown in Eqs. 2, 3, and 4:

$$Attr = [P_0, C_0, C_1, C_2, C_3, C_4, C_5, 0, 0, 0, 0, 0, 0] \tag{2}$$

$$Mask = [1, 1, 1, 1, 1, 1, 1, 0, 0, 0, 0, 0, 0] \tag{3}$$

$$Pred = \theta(Attr, Mask) \tag{4}$$

Start with the block to be predicted, which is part of the center layer of the 3x3x3 cube. The parent block ($P_0$) 2000 of the block to be predicted is to be considered first. The cousin block $C_0$ 2002 is be considered next, then the cousin block $C_1$ 2004, followed by the cousin block $C_2$ 2006. Switching to the front layer of the 3x3x3 cube, the cousin block $C_3$ 2008 is be considered next, then the cousin block $C_4$ 2010, followed by the cousin block $C_5$ 2012. The attributes that are used for the prediction are shown in the attribute vector, which is Eq. 2.

The mask vector has a "1" in locations corresponding to an attribute vector location that is used for the prediction. The mask vector has a "0" for locations corresponding to an attribute vector location that is not used for the prediction. The mask vector is shown in Eq. 3.

Eq. 4 indicates that the attribute and mask vectors are inputs to the functional block or network $\theta$.

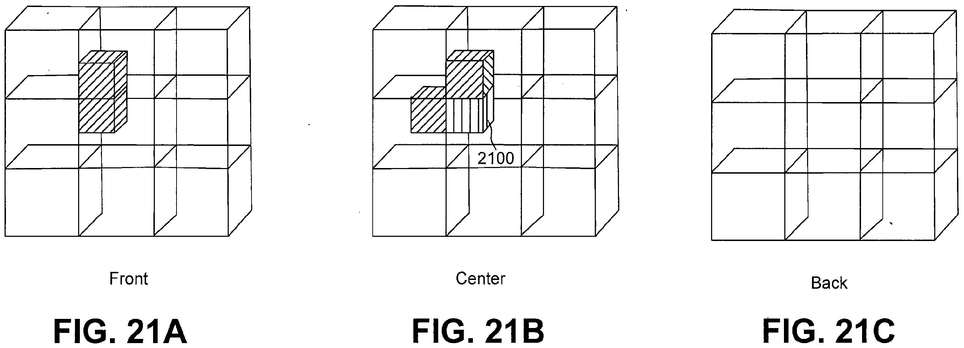

FIGs. 21A-21C are schematic illustrations showing an example 3D view of block prediction consideration order according to some embodiments. FIGs. 21A-21C show three layers (front, center, and back) of a 3x3x3 cube. A second example, in which the parent $U_1$ and the cousin $C_4$ (which may otherwise be used for prediction) are not available, is shown in FIGs. 21A-21C. The lower right sub-block 2100 shown in FIG. 21B is the block with associated attributes to be predicted in the current state. For this example, a first set of uncles and cousins of the block to be predicted are also shown.

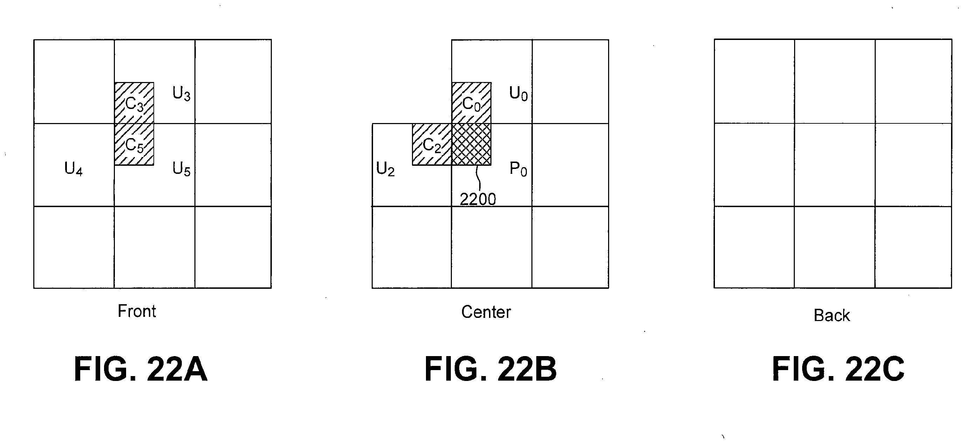

FIGs. 22A-22C are schematic illustrations showing an example 2D view of block prediction consideration order according to some embodiments. FIGs. 22A-22C taken together show an example 2D view that corresponds to the 3D view shown in FIGs. 21A-21C. The lower right sub-block 2200 shown in FIG. 22B is the block with associated attributes to be predicted in the current state. For some embodiments, with uncle $U_1$ and cousin $C_4$ not available, the inputs of the network $\theta$ are shown in Eqs. 5, 6, and 7:

$$Attr = [P_0, C_0, 0, C_2, C_3, 0, C_5, 0, 0, 0, 0, U_4, 0] \tag{5}$$

$$Mask = [1, 1, 0, 1, 1, 0, 1, 0, 0, 0, 0, 1, 0] \tag{6}$$

$$Pred = \theta(Attr, Mask) \qquad\qquad (7)$$

The behavior of the weighted average described in Eq. 1 is mimicked for this example. The main difference is that the constant weights WPN, WUF, WUE, WCF, and WCE are trainable. Using an architecture such as the one shown in FIGs. 10 and 15, other types of networks may be used for some embodiments, such as networks that have a different process other than mimicking a weighted average. Some examples are described below.

**Multi-Layer Perceptron (MLP) Architecture**

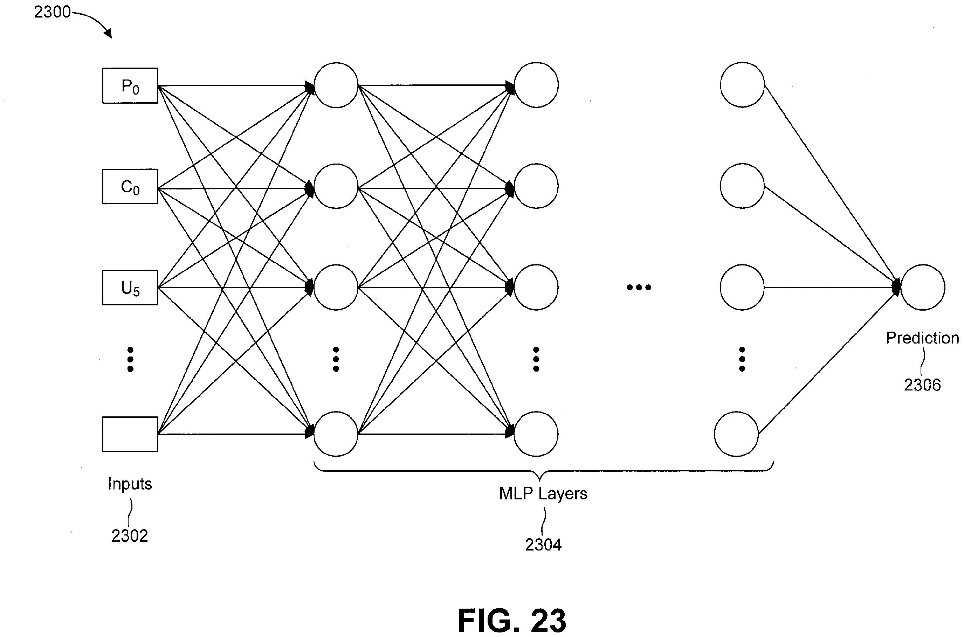

FIG. 23 is a schematic illustration showing an example multi-layer perceptron architecture according to some embodiments. This architecture 2300 may be composed an MLP with fully connected layers and take as input the attributes of the previous blocks to predict the attribute of the current child, block, or node. The inputs 2302 are shown on the left side of the MLP, and the prediction output 2306 is shown on the right side of the MLP of FIG. 23. Weights are associated with the connections between the nodes for each layer 2304.

For some embodiments, instead of using only the encoded attributes of the previous blocks, other inputs to the network may be added. Examples of such inputs may include the weights of the nodes (which may add geometry information to the prediction) and the current level of prediction, which may be expressed as the resolution L in which the prediction is performed.

**Deep Models**

The architecture may be replaced by any deep network model that takes one or more of the following items as inputs: (1) the attributes of the previously decoded voxels, (2) the parents' attributes, (3) the node weights (which indicate how many leaves are condensed in a particular node), and/or (4) the level in which the encoding/decoding is being done (such as, closer to the root of the tree or closer to the leaves). The architecture may use an MLP inside the prediction block of the entire codec. For some embodiments, the MLP may be replaced by another learning-based architecture.

Table 1 indicates examples of signaling that may be used to indicate the use of learning-based prediction on a bitstream.

**Table 1.**

| Name | Values | Size |
|---|---|---|
| RAHT Prediction Mode | 00 -> Use current method<br>01->Use "on the fly" learning mode<br>10 -> Use multi-pass learning mode | 2 bit flag |
| Architecture Used | XX -> Use architecture XX<br>This value is selected from a field of N different architectures from which to choose. (Such as LWA, MLP or other deep models) | N bit flags |
| IF RAHT Prefiction Mode == 10:<br>Additional bitstream that corresponds to the weights of the trained network | Weights of the multi-pass mode | N bits (depends on the size of the network) |

For some embodiments, weight adaptation for prediction of RAHT nodes is done on the fly (or at runtime). Performing a multi-pass to train and afterwards code the residuals with learned weights that may be adapted to a specific point cloud may be better at predicting the color of the child nodes. As described herein, the weights are adapted to the current point cloud, instead of generic weights that may not be optimal for different types of data. For some embodiments, the complexity of the encoder and decoder increase. For some embodiments, if the weights are learned first and sent, there may be an extra bitstream, but no increased complexity on the decoder side.

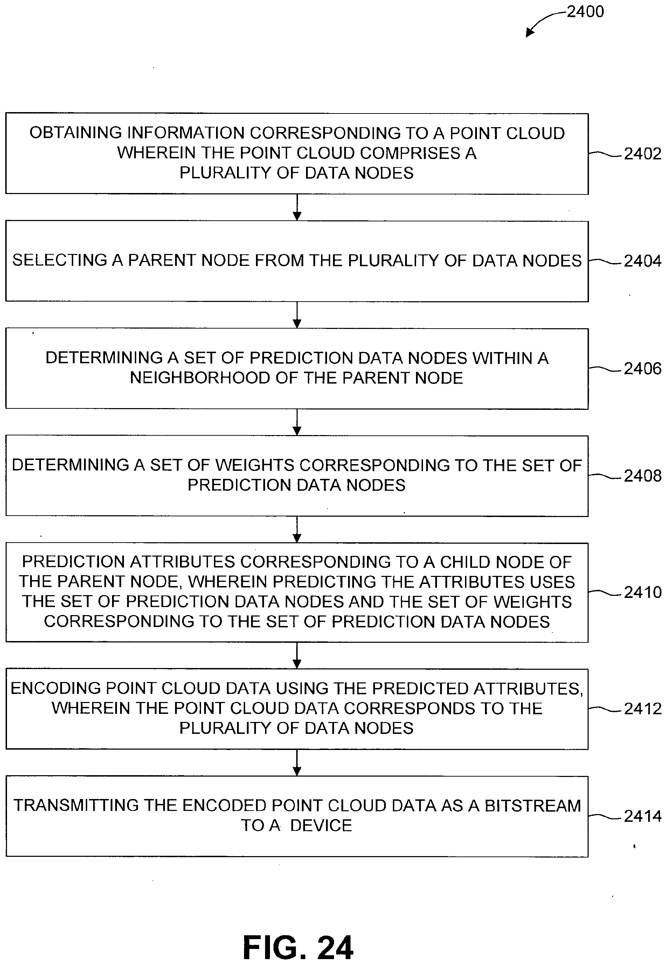

FIG. 24 is a flowchart illustrating an example encoding process according to some embodiments. For some embodiments, an example process 2400 may include obtaining 2402 information corresponding to a point cloud, wherein the point cloud comprises a plurality of data nodes. For some embodiments, the example process 2400 may further include selecting 2404 a parent node from the plurality of data nodes. For some embodiments, the example process 2400 may further include determining 2406 a set of prediction data nodes within a neighborhood of the parent node. For some embodiments, the example process 2400 may further include determining 2408 a set of weights corresponding to the set of prediction data nodes. For some embodiments, the example process 2400 may further include predicting 2410 attributes corresponding to a child node of the parent node, wherein predicting the attributes uses the set of prediction data nodes and the set of weights corresponding to the set of prediction data nodes. For some embodiments, the example process 2400 may further include encoding 2412 point cloud data using the predicted attributes, wherein the point cloud data corresponds to the plurality of data nodes. For some embodiments, the example process 2400 may further include transmitting 2414 the encoded point cloud data as a bitstream to a device

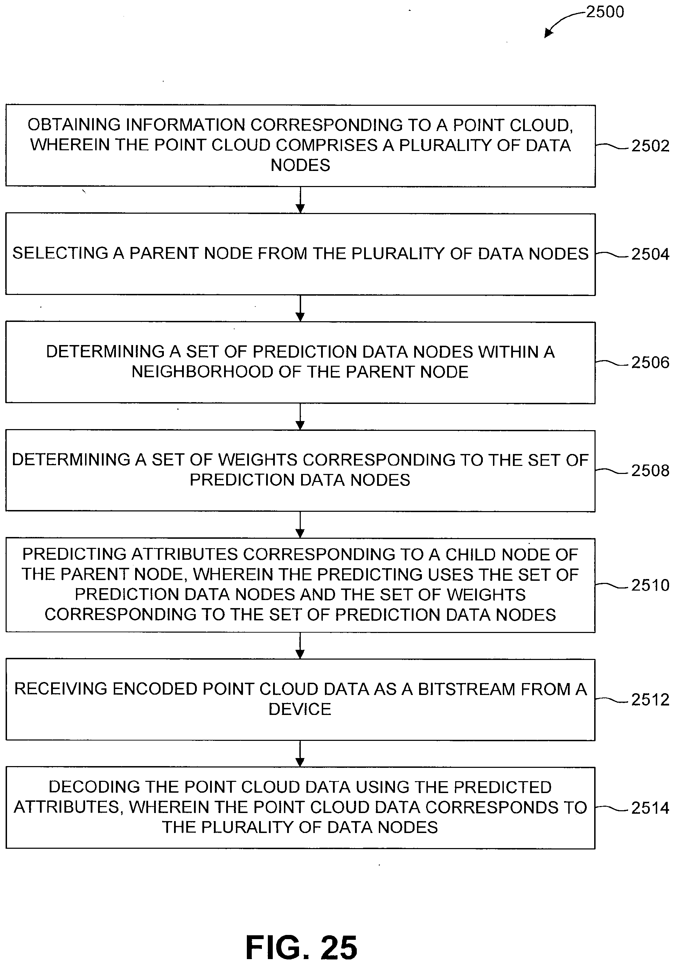

FIG. 25 is a flowchart illustrating an example decoding process according to some embodiments. For some embodiments, an example process 2500 may include obtaining 2502 information corresponding to a point cloud, wherein the point cloud comprises a plurality of data nodes. For some embodiments, the example process 2500 may further include selecting 2504 a parent node from the plurality of data nodes. For some embodiments, the example process 2500 may further include determining 2506 a set of prediction data nodes within a neighborhood of the parent node. For some embodiments, the example process 2500 may further include determining 2508 a set of weights corresponding to the set of prediction data nodes. For some embodiments, the example process 2500 may further include predicting 2510 attributes corresponding to a child node of the parent node, wherein the predicting uses the set of prediction data nodes and the set of weights corresponding to the set of prediction data nodes. For some embodiments, the example process 2500 may further include receiving 2512 encoded point cloud data as a bitstream from a device. For some embodiments, the example process 2500 may further include decoding 2514 the point cloud data using the predicted attributes, wherein the point cloud data corresponds to the plurality of data nodes.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining information corresponding to a point cloud, wherein the point cloud includes a plurality of data nodes; selecting a parent node from the plurality of data nodes; determining a set of prediction data nodes within a neighborhood of the parent node; determining a set of weights generated from the set of prediction data nodes; predicting attributes corresponding to a child node of the parent node, wherein predicting the attributes uses the set of prediction data nodes and the set of weights generated from the set of prediction data nodes; encoding point cloud data using the predicted attributes, wherein the point cloud data corresponds to the plurality of data nodes; and transmitting the encoded point cloud data as a bitstream to a device.

For some embodiments of the example method, determining the set of weights generated from the set of prediction data nodes includes performing a training process to determine the set of weights.

For some embodiments of the example method, determining the set of weights generated from the set of prediction data nodes includes using a runtime process to predict the set of weights.

For some embodiments of the example method, the runtime process includes performing a multi-layer perceptron (MLP) to predict the set of weights.

For some embodiments of the example method, the runtime process includes performing a learned weighted average (LWA) process to predict the set of weights.

For some embodiments of the example method, the runtime process includes using a deep network model to predict the set of weights.

For some embodiments of the example method, determining the set of weights generated from the set of prediction data nodes includes using a multi-pass mode process to predict the set of weights.

For some embodiments of the example method, the multi-pass process includes performing a learned weighted average (LWA) process to predict the set of weights.

Some embodiments of the example method may further include: determining a second set of weights corresponding to the set of prediction data nodes, wherein the second set of weights include a set of overfitting weights; and transmitting the second set of weights as a second bitstream to the device.

For some embodiments of the example method, predicting the attributes includes using a deep network model to predict the attributes.

For some embodiments of the example method, the deep network model takes at least one of these items as inputs: (1) attributes of previously decoded voxels, (2) attributes of the parent node, (3) the set of weights, and (4) level in which encoding of the point cloud data is being done, and the set of weights indicates how many leaves are condensed in a node of the set of prediction data nodes.

For some embodiments of the example method, predicting the attributes includes performing a region-adaptive hierarchical transform (RAHT) learning-based process.

For some embodiments of the example method, the neighborhood of the parent node includes one or more uncle nodes and one or more cousin nodes.

For some embodiments of the example method, determining the set of weights includes determining the set of weights through an adaptive process performed at runtime.

An example apparatus in accordance with some embodiments may include: a processor; and a non-transitory computer-readable medium storing instructions operative, when executed by the processor, to cause the apparatus to perform any one of the methods listed above.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

The aspects described and contemplated in this disclosure can be implemented in many different forms. While some embodiments are illustrated specifically, other embodiments are contemplated, and the discussion of particular embodiments does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present disclosure, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

The terms HDR (high dynamic range) and SDR (standard dynamic range) often convey specific values of dynamic range to those of ordinary skill in the art. However, additional embodiments are also intended in which a reference to HDR is understood to mean "higher dynamic range" and a reference to SDR is understood to mean "lower dynamic range." Such additional embodiments are not constrained by any specific values of dynamic range that might often be associated with the terms "high dynamic range" and "standard dynamic range."

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

Various implementations involve decoding. "Decoding", as used in this disclosure, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this disclosure, for example, extracting a picture from a tiled (packed) picture, determining an upsampling filter to use and then upsampling a picture, and flipping a picture back to its intended orientation.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions.

Various implementations involve encoding. In an analogous way to the above discussion about "decoding", "encoding" as used in this disclosure can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this disclosure.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. A mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Also, as used herein, the word "signal" refers to, among other things, indicating something to a corresponding decoder. For example, in certain embodiments the encoder signals a particular one of a plurality of parameters for region-based filter parameter selection for de-artifact filtering. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

- Adapting residues at an encoder according to any of the embodiments discussed.
- A bitstream or signal that includes one or more of the described syntax elements, or variations thereof.
- A bitstream or signal that includes syntax conveying information generated according to any of the embodiments described.
- Inserting in the signaling syntax elements that enable the decoder to adapt residues in a manner corresponding to that used by an encoder.
- Creating and/or transmitting and/or receiving and/or decoding a bitstream or signal that includes one or more of the described syntax elements, or variations thereof.
- Creating and/or transmitting and/or receiving and/or decoding according to any of the embodiments described.
- A method, process, apparatus, medium storing instructions, medium storing data, or signal according to any of the embodiments described.
- A TV, set-top box, cell phone, tablet, or other electronic device that performs adaptation of filter parameters according to any of the embodiments described.
- A TV, set-top box, cell phone, tablet, or other electronic device that performs adaptation of filter parameters according to any of the embodiments described, and that displays (e.g. using a monitor, screen, or other type of display) a resulting image.
- A TV, set-top box, cell phone, tablet, or other electronic device that selects (e.g. using a tuner) a channel to receive a signal including an encoded image, and performs adaptation of filter parameters according to any of the embodiments described.
- A TV, set-top box, cell phone, tablet, or other electronic device that receives (e.g. using an antenna) a signal over the air that includes an encoded image, and performs adaptation of filter parameters according to any of the embodiments described.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A method comprising:

   obtaining information corresponding to a point cloud,
   wherein the point cloud comprises a plurality of data nodes;
   selecting a parent node from the plurality of data nodes;
   determining a set of prediction data nodes within a neighborhood of the parent node;
   determining a set of weights generated from the set of prediction data nodes;
   predicting attributes corresponding to a child node of the parent node,
   wherein predicting the attributes uses the set of prediction data nodes and the set of weights generated from the set of prediction data nodes;
   encoding point cloud data using the predicted attributes,
   wherein the point cloud data corresponds to the plurality of data nodes; and
   transmitting the encoded point cloud data as a bitstream to a device.

2. The method of claim 1, wherein determining the set of weights generated from the set of prediction data nodes comprises performing a training process to determine the set of weights.

3. The method of any one of claims 1-2, wherein determining the set of weights generated from the set of prediction data nodes comprises using a runtime process to predict the set of weights.

4. The method of claim 3, wherein the runtime process comprises performing a multi-layer perceptron (MLP) to predict the set of weights.

5. The method of claim 3, wherein the runtime process comprises performing a learned weighted average (LWA) process to predict the set of weights.

6. The method of claim 3, wherein the runtime process comprises using a deep network model to predict the set of weights.

7. The method of any one of claims 1-2, wherein determining the set of weights generated from the set of prediction data nodes comprises using a multi-pass mode process to predict the set of weights.

8. The method of claim 7, wherein the multi-pass process comprises performing a learned weighted average (LWA) process to predict the set of weights.

9. The method of any one of claims 1-8, further comprising:

   determining a second set of weights corresponding to the set of prediction data nodes,
   wherein the second set of weights comprise a set of overfitting weights; and
   transmitting the second set of weights as a second bitstream to the device.

10. The method of any one of claims 1-9, wherein predicting the attributes comprises using a deep network model to predict the attributes.

11. The method of claim 10,

   wherein the deep network model takes at least one of these items as inputs: (1) attributes of previously decoded voxels, (2) attributes of the parent node, (3) the set of weights, and (4) level in which encoding of the point cloud data is being done, and
   wherein the set of weights indicates how many leaves are condensed in a node of the set of prediction data nodes.

12. The method of any one of claims 1-11, wherein predicting the attributes comprises performing a region-adaptive hierarchical transform (RAHT) learning-based process.

13. The method of any one of claims 1-12, wherein the neighborhood of the parent node comprises one or more uncle nodes and one or more cousin nodes.

14. The method of any one of claims 1-13, wherein determining the set of weights comprises determining the set of weights through an adaptive process performed at runtime.

15. An apparatus comprising:

   a processor; and
   a non-transitory computer-readable medium storing instructions operative, when executed by the processor, to cause the apparatus to perform the method of any one of claims 1 through 14.

100

104
RAN

106
Core Network

108
PSTN

112
Other Networks

110
Internet

114a

114b

116

102a

102b

102c

102d

FIG. 1A

116

102

122

124
Speaker/
Microphone

120
Transceiver

134
Power
Source

126
Keypad

118
Processor

136
GPS
Chipset

128
Display/
Touchpad

138
Peripherals

130
Non-
Removable
Memory

132
Removable
Memory

# FIG. 1B

**FIG. 1C**

EP 4 636 611 A1

FIG. 2

decoded sum of attributes at level d-*1* ⌐—302

upconverted sum of attributes at level d ⌐—304

orignal sum of attributes at level d ⌐—306

transformed residual ⌐—308

transform

transform

**FIG. 3**

EP 4 636 611 A1

FIG. 4

EP 4 636 611 A1

**FIG. 5**

**FIG. 6**

**FIG. 7**

Sibling/parent attributes —808

Switch on Architecture Used —810

802

MLP RAHT agnostic MLP weights, not RAHT weights

804

LWA Based on RAHT prediction formula « Updating » RAHT prediction weights

806

Other Deep Models

Current Voxel Attribute Prediction —812

**FIG. 8**

**FIG. 9**

EP 4 636 611 A1

**FIG. 10**

EP 4 636 611 A1

Mode 2: Multi-pass learning of the prediction weights - Encoder

FIG. 11

FIG. 12

**FIG. 13**

EP 4 636 611 A1

FIG. 14

EP 4 636 611 A1

Block
Decoding —1500

Previous block
information

Prediction

1514

Received from
encoder

Bitstream

1516

Decoding Process

1502

Remove DC —1512

-1

Loss —1510

Gradient Descent —1508

Update
Weights

Training
Processs

1504

1506— Remove DC

Reconstructed
Attributes

**FIG. 15**

Mode 2: Multi-pass learning of the prediction
weights - Decoder

Loop Through all blocks

Previous block information

1600

Block
Decoding

1610

Received From
encoder

Bitstream

1606 — Prediction

Decoding
Process

Training
Process

1604

1602

Prediction Weights

1608

**FIG. 16**

EP 4 636 611 A1

$$prediction = \frac{P_0 * W_0 + C_0 * W_1 + \dots + C_5 * W_6 + U_0 * W_7 + \dots + U_5 * W_{12}}{M_0 * W_0 + M_1 * W_1 + \dots + M_6 * W_6 + M_7 * W_7 + \dots + M_{12} * W_{12}}$$

**FIG. 17**

EP 4 636 611 A1

**FIG. 18**

**FIG. 19A** — Front

**FIG. 19B** — Center

**FIG. 19C** — Back

EP 4 636 611 A1

2008

U₃

C₃

C₄ C₅

U₄ U₅

2010 2012

Front

**FIG. 20A**

2004 2002

U₁ U₀

C₁ C₀

C₂

U₂ P₀

2006 2000

Center

**FIG. 20B**

Back

**FIG. 20C**

EP 4 636 611 A1

Front

**FIG. 21A**

2100

Center

**FIG. 21B**

Back

**FIG. 21C**

**FIG. 22A**

Front

U$_3$

C$_3$

C$_5$

U$_4$  U$_5$

**FIG. 22B**

Center

U$_0$

C$_0$

C$_2$

U$_2$  P$_0$

2200

**FIG. 22C**

Back

FIG. 23

2400

| OBTAINING INFORMATION CORRESPONDING TO A POINT CLOUD WHEREIN THE POINT CLOUD COMPRISES A PLURALITY OF DATA NODES | 2402 |

| SELECTING A PARENT NODE FROM THE PLURALITY OF DATA NODES | 2404 |

| DETERMINING A SET OF PREDICTION DATA NODES WITHIN A NEIGHBORHOOD OF THE PARENT NODE | 2406 |

| DETERMINING A SET OF WEIGHTS CORRESPONDING TO THE SET OF PREDICTION DATA NODES | 2408 |

| PREDICTION ATTRIBUTES CORRESPONDING TO A CHILD NODE OF THE PARENT NODE, WHEREIN PREDICTING THE ATTRIBUTES USES THE SET OF PREDICTION DATA NODES AND THE SET OF WEIGHTS CORRESPONDING TO THE SET OF PREDICTION DATA NODES | 2410 |

| ENCODING POINT CLOUD DATA USING THE PREDICTED ATTRIBUTES, WHEREIN THE POINT CLOUD DATA CORRESPONDS TO THE PLURALITY OF DATA NODES | 2412 |

| TRANSMITTING THE ENCODED POINT CLOUD DATA AS A BITSTREAM TO A DEVICE | 2414 |

# FIG. 24

2500

OBTAINING INFORMATION CORRESPONDING TO A POINT CLOUD, WHEREIN THE POINT CLOUD COMPRISES A PLURALITY OF DATA NODES — 2502

SELECTING A PARENT NODE FROM THE PLURALITY OF DATA NODES — 2504

DETERMINING A SET OF PREDICTION DATA NODES WITHIN A NEIGHBORHOOD OF THE PARENT NODE — 2506

DETERMINING A SET OF WEIGHTS CORRESPONDING TO THE SET OF PREDICTION DATA NODES — 2508

PREDICTING ATTRIBUTES CORRESPONDING TO A CHILD NODE OF THE PARENT NODE, WHEREIN THE PREDICTING USES THE SET OF PREDICTION DATA NODES AND THE SET OF WEIGHTS CORRESPONDING TO THE SET OF PREDICTION DATA NODES — 2510

RECEIVING ENCODED POINT CLOUD DATA AS A BITSTREAM FROM A DEVICE — 2512

DECODING THE POINT CLOUD DATA USING THE PREDICTED ATTRIBUTES, WHEREIN THE POINT CLOUD DATA CORRESPONDS TO THE PLURALITY OF DATA NODES — 2514

# FIG. 25

Europäisches
Patentamt

European
Patent Office

Office européen
des brevets

# EUROPEAN SEARCH REPORT

**Application Number**

EP 24 31 5193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HOU LIZHI ET AL: "Learning-based Intra-Prediction For Point Cloud Attribute Transform Coding", 2022 IEEE 24TH INTERNATIONAL WORKSHOP ON MULTIMEDIA SIGNAL PROCESSING (MMSP), IEEE, 26 September 2022 (2022-09-26), pages 1-6, XP034231607, DOI: 10.1109/MMSP55362.2022.9949997 [retrieved on 2022-11-22] * Section I.B * * Section II.A * * Section II.B * * Section III * * figures 1b,2 * | 1-15 | INV. G06F16/901 G06F16/71 |
| A | US 2020/302651 A1 (FLYNN DAVID [DE] ET AL) 24 September 2020 (2020-09-24) * abstract * * paragraph [0053] - paragraph [0057] * * paragraph [0091] - paragraph [0101] * * paragraph [0111] - paragraph [0114] * | 1-15 | |

-----

-----

-/--

**TECHNICAL FIELDS SEARCHED (IPC)**

G06F

The present search report has been drawn up for all claims

| Place of search | Date of completion of the search | Examiner |
|---|---|---|
| Berlin | 19 September 2024 | Pose Rodríguez, J |

EPO FORM 1503 03.82 (P04C01)

Europäisches
Patentamt

European
Patent Office

Office européen
des brevets

# EUROPEAN SEARCH REPORT

**Application Number**

EP 24 31 5193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | GRAZIOSI D. ET AL: "An overview of ongoing point cloud compression standardization activities: video-based (V-PCC) and geometry-based (G-PCC)", APSIPA TRANSACTIONS ON SIGNAL AND INFORMATION PROCESSING, vol. 9, no. 1, 1 January 2020 (2020-01-01), XP093012170, ISSN: 2048-7703, DOI: 10.1017/ATSIP.2020.12 Retrieved from the Internet: URL:https://www.cambridge.org/core/services/aop-cambridge-core/content/view/56FCAF660DD44348BCB1BCA9B5EC56CF/S2048770320000128a.pdf/div-class-title-an-overview-of-ongoing-point-cloud-compression-standardization-activities-video-based-v-pcc-and-geometry-based-g-pcc-div.pdf> \* abstract \* \* Section IV.B.3 \* | 1-15 | |
| | ----- | | **TECHNICAL FIELDS SEARCHED (IPC)** |

The present search report has been drawn up for all claims

| Place of search | Date of completion of the search | Examiner |
|---|---|---|
| Berlin | 19 September 2024 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 31 5193

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2024

| Patent document cited in search report | Publication date | Patent family member(s) | | Publication date |
|---|---|---|---|---|
| US 2020302651 A1 | 24-09-2020 | CN | 113678466 A | 19-11-2021 |
| | | EP | 3942830 A1 | 26-01-2022 |
| | | US | 2020302651 A1 | 24-09-2020 |
| | | WO | 2020187710 A1 | 24-09-2020 |

EPO FORM P0459

For more details about this annex : see Official Journal of the European Patent Office, No. 12/82